# EUROPEAN PATENT APPLICATION

(11) **EP 3 685 993 A1**
(43) Date of publication of application: **29.07.2020**
(21) Application number: 17925743.1
(22) Date of filing: 19.09.2017
(51) Int. Cl.: B29C 64/20, B29C 64/153, B33Y 10/00, B33Y 30/00

(54) **POWDER BED FUSION BONDING DEVICE**

(71) Applicant: Aspect Inc., Inagi-shi, Tokyo 206-0803 (JP)
(72) Inventor: HAGIWARA Masashi, Inagi-shi Tokyo 206-0803 (JP)
(74) Representative: SSM Sandmair
(86) International application number: PCT/JP2017/033708
(87) International publication number: WO 2019/058421

(57) **Abstract**

Provided is a powder bed fusion apparatus that further reduces the difference in temperature between a powder material at a peripheral region in a fabrication container and a powder material at a center region in the fabrication container during preheating. The powder bed fusion apparatus comprises: a container (5) that has a quadrangular shape as viewed from above and has an opening in an upper surface; a table (18) which is disposed in the opening of the container 5 and onto which a powder material (26) is supplied through the upper surface; and a plurality of heaters (20) to (23) that are attached to each of corner portions (5c) to (5f) of sides of the container (5) to heat the powder material (26) on the table (18) through the corner portions (5c) to (5f).

## Description

### [Technical Field]

The present invention relates to a powder bed fusion apparatus.

### [Background Art]

In recent years, there has been an increasing demand for modeling apparatuses for modeling prototype parts for functionality tests, parts to be used in high-mix low-volume products, and so on.

Such modeling apparatuses include stereolithography apparatuses, powder bed fusion apparatuses, and the like. With, for example, a powder bed fusion apparatus among these modeling apparatuses, a thin layer of a powder material is formed on a modeling table in a fabrication container. Then, a laser beam is applied to a particular region in the thin layer of the powder material to fuse the powder material and then the powder material is solidified to form a solidified layer in the region. Such formation of a thin layer of the powder material and formation of a solidified layer via application of a laser beam are repeated in the fabrication container to laminate solidified layers. As a result, a three-dimensional model is fabricated.

In the powder bed fusion apparatus, heaters are provided above and around the fabrication container, and a thin layer of the powder material is preheated with these heaters to raise the temperature of this thin layer to a temperature slightly lower than the melting point of the powder material, and then a laser beam is applied.

This reduces the difference in temperature in the thin layer of the powder material between the region to be irradiated with the laser beam and the region around it and therefore suppresses warpage of the solidified layer due to excessive shrinkage of the solidified layer occurring after the application of the laser beam.

### [Citation List]

### [Patent Literature]

Patent Literature 1: Japanese Patent Laid-open No. 2008-37024

### [Summary of Invention]

### [Technical Problem]

Meanwhile, in the powder material in the fabrication container, the temperature of the powder material at a peripheral region abutting the sides of the fabrication container may become lower than the temperature of the powder material at a center region during the preheating, even though the above-mentioned heaters are provided.

Here, there is a case where a number of models with the same shape and the same size are fabricated using the entire inside of the fabrication container. In this case, the amount of shrinkage of a solidified layer occurring after the application of a laser beam will be greatly different between the peripheral region and the center region inside the fabrication container if the temperature of the powder material is greatly different between the peripheral region and the center region. Consequently, the sizes and shapes of the models fabricated at the peripheral region and the center region may be different.

In view of the above, an object is to further reduce the difference in temperature between a powder material at a peripheral region in a fabrication container of a powder bed fusion apparatus and a powder material at a center region in the fabrication container during preheating.

### [Solution to Problem]

One aspect of the technique disclosed herein provides a powder bed fusion apparatus comprising: a container that has a quadrangular shape as viewed from above and has an opening in an upper surface; a table which is disposed in the opening of the container and onto which a powder material is supplied through the upper surface; and a plurality of heaters that are attached to each of corner portions of sides of the container to heat the powder material on the table through the corner portions.

### [Advantageous Effect of Invention]

According to the one aspect of the technique disclosed herein, the heaters are attached to each of the corner portions of the sides of the quadrangle container. Hence, the powder material at regions near the corner portions of the container is reliably heated.

Thus, in the peripheral region inside the container, the temperature of the powder material at the regions near the corner portions can be brought close to the temperature of the powder material at a center region inside the container during preheating. This makes it possible to further reduce the difference in temperature between the powder material at the peripheral region including the regions near the corner portions and the powder material at the center region.

Therefore, in the case where a number of models with the same shape and the same size are fabricated using the entire inside of the container, the sizes and shapes of the models fabricated at the peripheral region and the center region can be substantially the same.

### [Brief Description of Drawings]

[FIG. 1] FIG. 1 is a diagram illustrating an overview of the configuration of a powder bed fusion apparatus according an embodiment of the present invention.
[FIGS. 2A and 2B] FIG. 2A is a top view explaining the configurations of storage containers, a fabrication container, a side heating unit, a carrying plate, a recoater, an upper heating unit, a temperature detection unit, and a laser beam application unit, and FIG. 2B is a cross-sectional view along line I-I in FIG. 2A.
[FIGS. 3A, 3B and 3C] FIG. 3A is a perspective view illustrating the structure of the fabrication container, FIG. 3B is a side view illustrating the structure, and FIG. 3C is a top view illustrating the structure.
[FIG. 4] FIG. 4 is a perspective view illustrating the configuration of an L-shaped heater of the side heating unit in a first embodiment.
[FIG. 5] FIG. 5 is a circuit diagram illustrating an example of the electrical configuration of the L-shaped heater.
[FIGS. 6A and 6B] FIGS. 6A and 6B are views explaining a method of attaching four L-shaped heaters to the fabrication container (part 1).
[FIGS. 7A and 7B] FIGS. 7A and 7B are views explaining the method of attaching the four L-shaped heaters to the fabrication container (part 2).
[FIGS. 8A and 8B] FIGS. 8A and 8B are views explaining the method of attaching the four L-shaped heaters to the fabrication container (part 3).
[FIG. 9] FIG. 9 is a view illustrating the configuration of a heat insulation member.
[FIG. 10] FIG. 10 is a diagram explaining a method of electrically connecting the four L-shaped heaters.
[FIGS. 11A and 11B] FIGS. 11A and 11B are views explaining a method of forming a buffer layer (part 1).
[FIG. 12] FIG. 12 is a view explaining the method of forming a buffer layer (part 2).
[FIG. 13] FIG. 13 is a view explaining a method of fabricating a model (part 1).
[FIGS. 14A and 14B] FIGS. 14A and 14B are views explaining the method of fabricating a model (par 2).
[FIG. 15] FIG. 15 is a view explaining the method of fabricating a model (par 3).
[FIGS. 16A and 16B] FIGS. 16A and 16B are views explaining the method of fabricating a model (par 4).
[FIG. 17] FIG. 17 is a view explaining the method of fabricating a model (par 5).
[FIG. 18] FIG. 18 is a view explaining the state of a powder material in the carrying plate and the fabrication container in the powder bed fusion apparatus in the first embodiment during preheating.
[FIGS. 19A and 19B] FIG. 19A is a side view illustrating the configurations of a fabrication container and a side heating unit in a powder bed fusion apparatus in a first comparative example, and FIG. 19B is a top view illustrating these configurations.
[FIG. 20] FIG. 20 is a view explaining the state of a powder material in a carrying plate and the fabrication container in the powder bed fusion apparatus in the first comparative example during preheating.
[FIGS. 21A and 21B] FIG. 21A is a side view illustrating the configurations of a fabrication container and a side heating unit in a powder bed fusion apparatus in a second comparative example, and FIG. 21B is a top view illustrating these configurations.
[FIG. 22] FIG. 22 is a view explaining the positional relation between non-heat generation portions of rod-shaped heaters of the upper heating unit and the sides of the fabrication container.
[FIG. 23] FIG. 23 is a perspective view illustrating the configuration of an L-shaped heater in modification 2.
[FIGS. 24A and 24B] FIG. 24A is a side view illustrating the configurations of a fabrication container and a side heating unit in a powder bed fusion apparatus in a second embodiment, and FIG. 24B is a top view illustrating these configurations.
[FIG. 25] FIG. 25 is a perspective view illustrating the configuration of a rod-shaped heater of the side heating unit.
[FIG. 26] FIG. 26 is a side view illustrating the configuration of a plate-shaped heater of the side heating unit.
[FIG. 27] FIG. 27 is a view illustrating the positions of a plurality of regions differing in amount of heat generation in the rod-shaped heater, and the positions of a plurality of regions differing in amount of heat generation in the plate-shaped heater in and on a side of the fabrication container.

### [Description of Embodiments]

Embodiments of the present invention will be described below in detail with reference to the accompanying drawings.

### (First Embodiment)

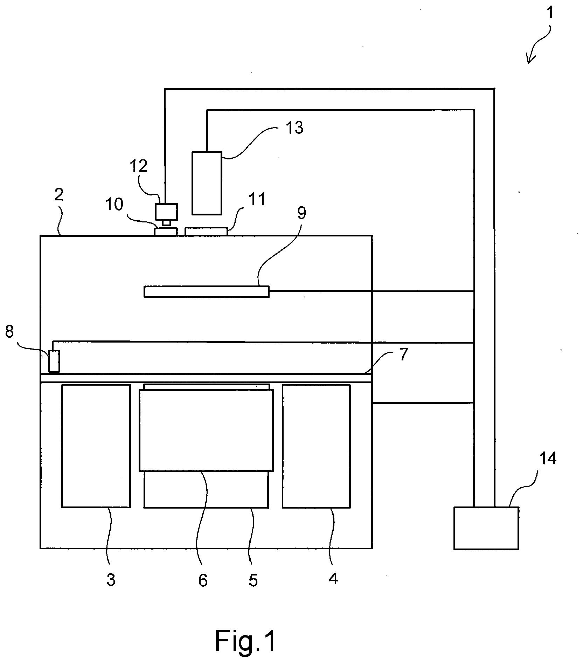

FIG. 1 is a diagram illustrating an overview of the configuration of a powder bed fusion apparatus according to an embodiment of the present invention.

As illustrated in FIG. 1, a powder bed fusion apparatus 1 according to the embodiment of the present invention houses, in its housing 2, two storage containers 3 and 4 which store a powder material, and a fabrication container 5 where a model is fabricated using the powder material in the storage containers 3 and 4. These containers 3 to 5 are taken into and out of the housing 2 through a door not illustrated.

Also, among the containers 3 to 5, the fabrication container 5 is provided on its sides with a side heating unit 6 that laterally heats the powder material in the fabrication container 5. Further, though not illustrated, a later-described fabrication table in the fabrication container 5 is provided on its lower surface with a lower heating unit that heats the powder material in the fabrication container 5 from below.

A carrying plate 7 is installed on the storage containers 3 and 4 and the fabrication container 5. On the upper surface of the carrying plate 7, a recoater 8 is disposed which carries the powder material from the storage container 3 or the storage container 4 over the carrying plate 7 to the fabrication container 5. Meanwhile, though not illustrated, a carrying plate heating unit that heats the powder material on the carrying plate 7 is provided on the lower surface of the carrying plate 7.

Above the carrying plate 7 is provided an upper heating unit 9 that heats the powder material in the fabrication container 5 from above. Also provided above the carrying plate 7, though not illustrated, are upper heating units that heat the powder materials in the storage containers 3 and 4 from above.

The above-described storage containers 3 and 4, fabrication container 5, side heating unit 6, carrying plate 7, recoater 8, upper heating unit 9, and so on are disposed in the housing 2.

On the top of the housing 2, on the other hand, two windows 10 and 11 are installed. Above one window 10 among these windows 10 and 11 is disposed a temperature detection unit 12 that detects the temperature of the powder material in the fabrication container 5. Also provided above the housing 2 are, though not illustrated, temperature detection units that detect the temperatures of the powder materials in the storage containers 3 and 4.

Moreover, above the other window 11 is disposed a laser beam application unit 13 that applies a laser beam to the powder material in the fabrication container 5.

Further, outside the housing 2, a control unit 14 is provided which controls the side heating unit 6, the recoater 8, the upper heating unit 9, the temperature detection unit 12, the laser beam application unit 13, and so on.

Note that the type of powder material used in the powder bed fusion apparatus 1 is not particularly limited. For example, resins such as polypropylene (PP), polyamide (PA), and polyphenylene sulfide (PPS) are usable as the powder material.

The configuration of each component of the powder bed fusion apparatus 1 mentioned above will be described below.

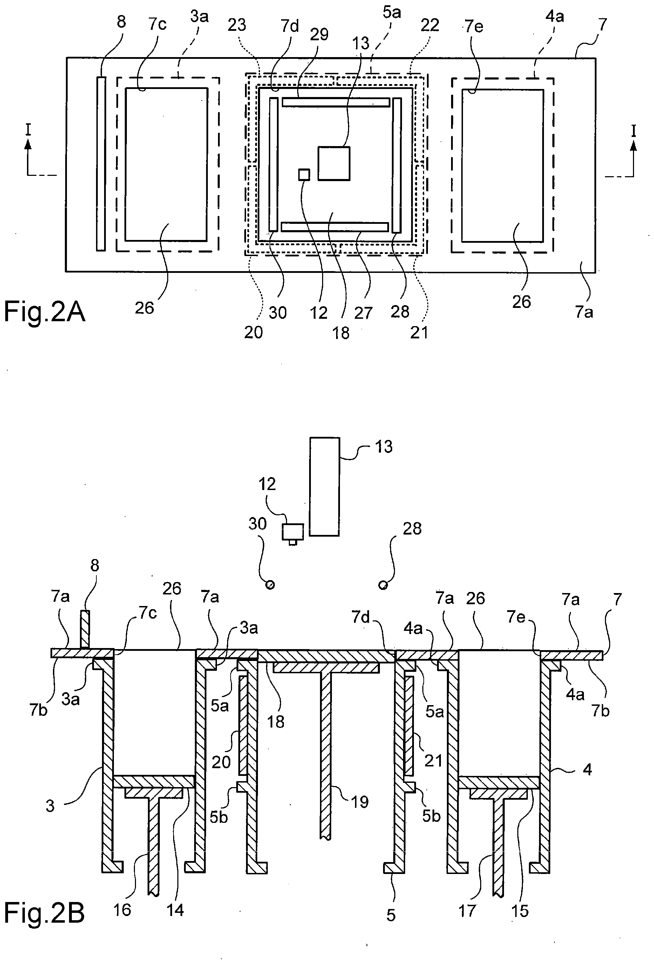

FIG. 2A is a top view explaining the configurations of the storage containers 3 and 4, the fabrication container 5, the side heating unit 6, the carrying plate 7, the recoater 8, the upper heating unit 9, the temperature detection unit 12, and the laser beam application unit 13, and FIG. 2B is a cross-sectional view along line I-I in FIG. 2A.

Firstly, the storage containers 3 and 4 will be described.

As illustrated in FIGS. 2A and 2B, the storage containers 3 and 4 are tubular containers having a substantially rectangular shape as viewed from above and having an opening in each of the upper surface and the lower surface. The storage containers 3 and 4 are formed by performing processes such as bending and welding on a cold-rolled steel sheet or a sheet of a metal such as an aluminum alloy. For more accurate model fabrication, the storage containers 3 and 4 may be formed by joining cut pieces of sheet metal.

To the upper surfaces of the storage containers 3 and 4 are attached frame-shaped flanges 3a and 4a surrounding the sides of the upper surfaces. The flanges 3a and 4a are provided as reinforcing members for the storage containers 3 and 4.

Also, supply tables 14 and 15 are placed inside the openings in the storage containers 3 and 4. Support rods 16 and 17 connected to drivers not illustrated are attached to the lower surfaces of the supply tables 14 and 15. As the control unit 14 drives these drivers, the supply tables 14 and 15 are raised or lowered inside the openings in the storage containers 3 and 4 via the support rods 16 and 17.

Next, the fabrication container 5 will be described.

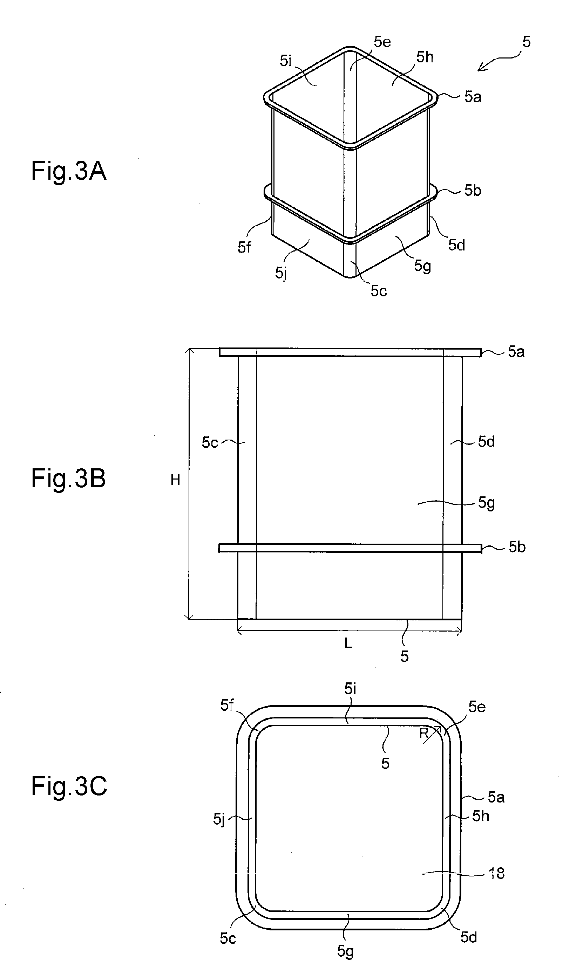

FIG. 3A is a perspective view illustrating the structure of the fabrication container 5, FIG. 3B is a side view illustrating the structure, and FIG. 3C is a top view illustrating the structure.

As illustrated in FIGS. 2A, 2B, 3A, 3B and 3C, the fabrication container 5 is a tubular container having a substantially square shape as viewed from above and having an opening in each of the upper surface and the lower surface. The fabrication container 5 is also formed by performing processes such as bending and welding on a cold-rolled steel sheet or a sheet of a metal such as an aluminum alloy. For more accurate model fabrication, the fabrication container 5 may be formed by joining cut pieces of sheet metal.

To the upper surface of the fabrication container 5 is attached a frame-shaped flange 5a surrounding the sides of the upper surface. Moreover, to a portion of the fabrication container 5 between its upper surface and lower surface is attached a frame-shaped rib 5b surrounding the sides of the portion. The flange 5a and the rib 5b are provided as reinforcing members for the fabrication container 5.

A modeling table 18 is placed inside the opening in the fabrication container 5. Though not illustrated, a spacer is attached to the lower surface of the modeling table 18. This spacer is provided with an opening, and a plate-shaped electric resistance heater is attached as the above-mentioned lower heating unit to the lower surface of the modeling table 18 inside this opening.

A support rod 19 connected to a driver not illustrated is attached to the lower surface of the spacer. As the control unit 14 drives this driver, the modeling table 18 is raised or lowered inside the opening in the fabrication container 5 via the support rod 19.

Also, each of the four corners of the sides of the fabrication container 5 is rounded. Hereinafter, the rounded portions of the sides of the fabrication container 5 will be referred to as corner portions 5c to 5f. Also, the straight portions excluding the corner portions 5c to 5f will be referred to as straight portions 5g to 5j.

The size of the fabrication container 5 is not particularly limited. For example, a length L of each of the four sides of the fabrication container 5 is 340 mm and a height H of the fabrication container 5 is 470 mm. Moreover, a radius of curvature R of the outer sides of the corner portions 5c to 5f is 25 mm.

Next, the side heating unit 6, which is provided on the sides of the fabrication container 5, will be described.

As illustrated in FIG. 2A, the side heating unit 6 comprises four L-shaped heaters 20 to 23.

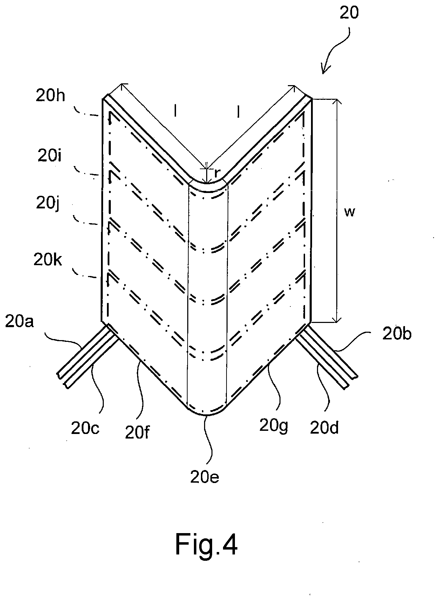

FIG. 4 is a perspective view illustrating the configuration of the L-shaped heater. This FIG. 4 exemplarily illustrates the configuration of the L-shaped heater 20 among the L-shaped heaters 20 to 23.

As illustrated in FIG. 4, the L-shaped heater 20 is a heater in an L-shape as viewed from above and is formed by bending a flat plate-shaped heater into the L-shape. This plate-shaped heater is an electric resistance heater formed by winding metallic wires such as nichrome wires as heat generators around the entire periphery of a thin plate-shaped electric insulator of mica or the like, and covering the periphery of the insulator and the metallic wires with a thin exterior plate such as a zinc-plated steel sheet.

The L-shaped heater 20 comprises cables 20a to 20d for externally applying voltage to the metallic wires serving as the heat generators.

The L-shaped heater 20 further comprises therein a temperature sensor not illustrated. This temperature sensor detects the temperature of the L-shaped heater 20 itself and transmits data of the detected temperature to the control unit 14. The control unit 14 adjusts the amount of heat generation by the L-shaped heater 20 based on the temperature data.

Meanwhile, the corner of the L-shaped heater 20 is also rounded like the corners of the sides of the fabrication container 5. Hereinafter, the rounded portion of the L-shaped heater 20 will be referred to as a corner portion 20e. Also, the straight portions excluding the corner portion 20e will be referred to as straight portions 20f and 20g.

The size of the L-shaped heater 20 is set according to the size of the fabrication container 5. For example, a length 1 of each of edges of the L-shaped heater 20 is 170 mm, which is a half of the length L of a side of the fabrication container 5. A width w is shorter than the length of the fabrication container 5 between the flange 5a and the rib 5b and is 300 mm. Also, a radius of curvature r of the inner side of the corner portion 20e is 25 mm, which is equal to the radius of curvature R of the outer sides of the corner portions 5c to 5f of the fabrication container 5, so that the corner portion 20e can contact any of the corner portions 5c to 5f without a gap therebetween.

Furthermore, in the L-shaped heater 20, a plurality of regions 20h to 20k are formed which are arranged side by side in the width direction and differ from each other in amount of heat generation, as illustrated by the alternate long and short dash line in FIG. 4. These regions 20h to 20k will be described.

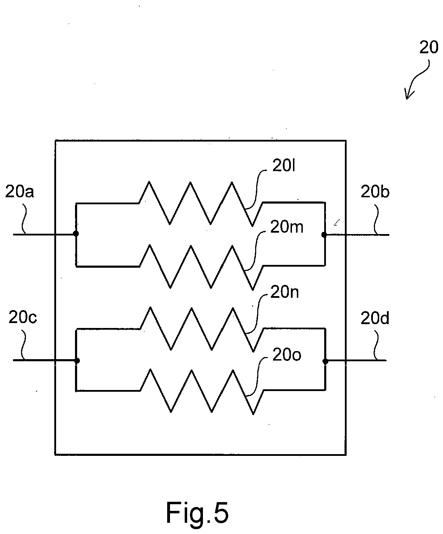

FIG. 5 is a circuit diagram illustrating an example of the electrical configuration of the L-shaped heater 20.

As illustrated in FIG. 5, the L-shaped heater 20 comprises four metallic wires 201 to 20o as the above-mentioned heat generators which differ from each other in electrical resistivity.

Among the metallic wires 201 to 20o, the metallic wire 201 with the highest electrical resistivity is disposed in the uppermost region 20h in the width direction of the L-shaped heater 20. Then, the metallic wires 20m and 20n with the second and third highest electrical resistivities are disposed in the second and third regions 20i and 20j from the top, respectively. Lastly, the metallic wire 20o with the lowest electrical resistivity is disposed in the lowermost region 20k.

Further, the metallic wire 201 and the metallic wire 20m are connected in parallel between the cable 20a and the cable 20b. Also, the metallic wire 20n and the metallic wire 20o are connected in parallel between the cable 20c and the cable 20d.

With such an electrical configuration, application of a voltage between the cable 20a and the cable 20c with the cable 20b and the cable 20d connected to each other causes substantially the entire surface of the L-shaped heater 20 to generate heat and also forms the plurality of regions 20h, 20i, 20j, and 20k across which the amount of heat generation is smaller at a lower position in the width direction.

The L-shaped heater 20 is configured in this manner. Meanwhile, the other L-shaped heaters 21 to 23 also have the same configuration as that of the L-shaped heater 20.

These four L-shaped heaters 20 to 23 are attached to the corner portions 5c to 5f of the fabrication container 5. A method for the attachment will be described.

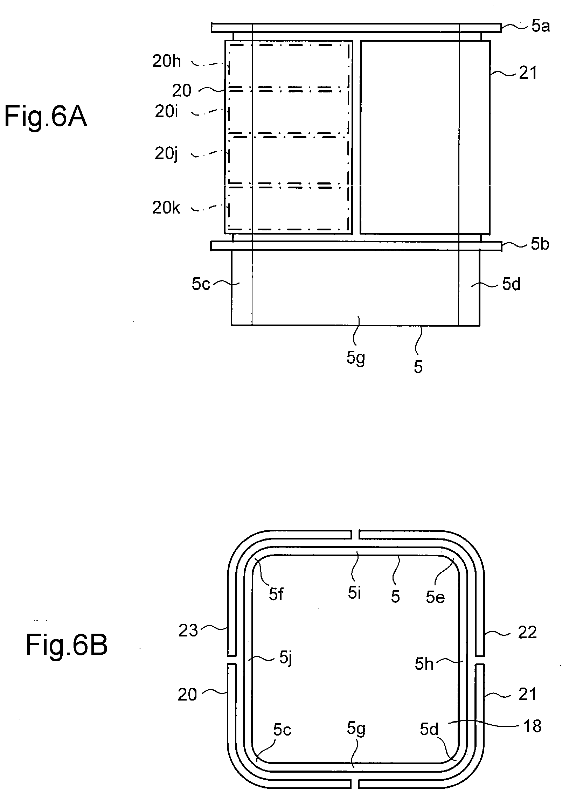

FIGS. 6A to 8B are views explaining the method of attaching the L-shaped heaters 20 to 23 to the fabrication container 5.

Note that FIGS. 6A, 7A, and 8A are views of the fabrication container 5 as viewed from a side, while FIGS. 6B, 7B, and 8B are views of the fabrication container 5 as viewed from above. Also, in FIGS. 6B, 7B, and 8B, illustration of the flange 5a and the rib 5b of the fabrication container 5 is omitted to facilitate understanding of the explanation.

Firstly, as illustrated in FIGS. 6A and 6B, the above-mentioned L-shaped heaters 20 to 23 are prepared.

Then, among the L-shaped heaters 20 to 23, the L-shaped heater 20 is disposed at the outer side of the corner portion 5c of the fabrication container 5, the L-shaped heater 21 is disposed at the outer side of the corner portion 5d, the L-shaped heater 22 is disposed at the outer side of the corner portion 5e, and the L-shaped heater 23 is disposed at the outer side of the corner portion 5f to thereby surround the sides of the fabrication container 5 with the L-shaped heaters 20 to 23.

In doing so, each of the L-shaped heaters 20 to 23 is disposed between the flange 5a and the rib 5b of the fabrication container 5 such that the uppermost region in each of the L-shaped heaters 20 to 23 with the largest amount of heat generation (e.g., the region 20h for the L-shaped heater 20) is on the flange 5a side of the fabrication container 5 and the lowermost region with the smallest amount of heat generation (e.g., the region 20k for the L-shaped heater 20) is on the rib 5b side.

Then, a heat insulation member for covering the L-shaped heaters 20 to 23 is prepared.

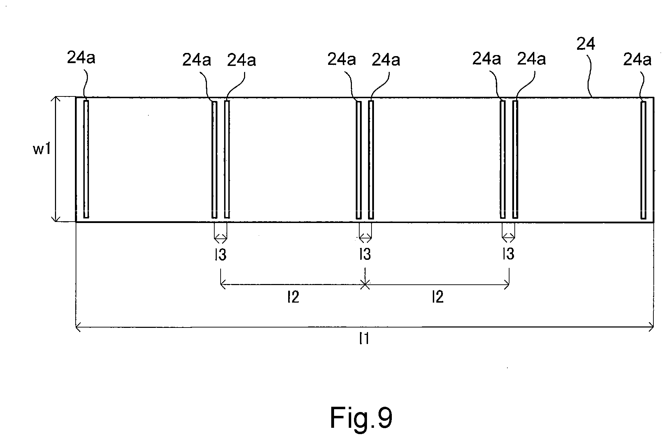

FIG. 9 is a view illustrating the configuration of the heat insulation member.

As illustrated in FIG. 9, a heat insulation member 24 is a belt-shaped member. On one surface of the heat insulation member 24 are provided a plurality of belt-shaped protrusions 24a extending in the width direction. Among the plurality of protrusions 24a, each two close protrusions 24a are paired, and the pairs of protrusions 24a are disposed at a plurality of positions at predetermined intervals in the length direction of the heat insulation member 24. Note that the two protrusions 24a disposed at both ends of the heat insulation member 24 in the length direction will be a pair as well.

The material of the heat insulation member 24 and the protrusions 24a is not particularly limited. For example, a silicone sponge sheet having a heat insulation property and flexibility is usable as the material of the heat insulation member 24 and the protrusions 24a.

Also, the size of the heat insulation member 24 is set according to the sizes of the fabrication container 5 and the L-shaped heaters 20 to 23. For example, a length 11 of the heat insulation member 24 is 1360 mm, which is equal to the sum of the lengths L of the four sides of the fabrication container 5. Also, a width w1 is 300 mm, which is equal to the width w of the L-shaped heaters 20 to 23.

Further, an interval 12 between one pair of protrusions 24a and one pair of protrusions 24a is 340 mm, which is equal to the length L of a side of the fabrication container 5. Also, an interval 13 between the two protrusions 24a in each pair is about 50 mm.

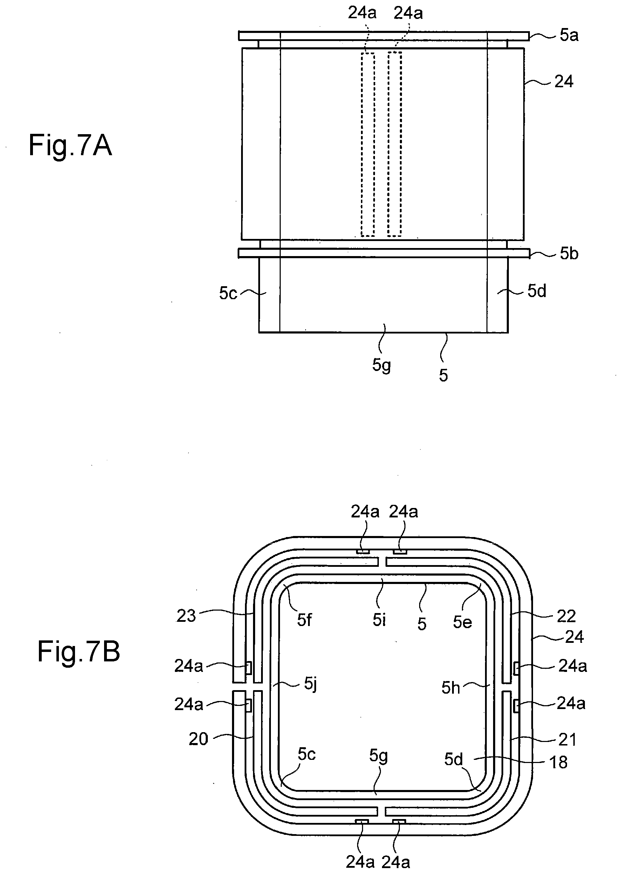

Then, as illustrated in FIGS. 7A and 7B, the heat insulation member 24 is disposed so as to surround the L-shaped heaters 20 to 23.

In doing so, the heat insulation member 24 is disposed such that the surface of the heat insulation member 24 with the protrusions 24a is on the L-shaped heaters 20 to 23 side, and the two protrusions 24a in each pair are located at the adjacent ends of the L-shaped heaters 20 and 21, the adjacent ends of the L-shaped heaters 21 and 22, the adjacent ends of the L-shaped heaters 22 and 23, or the adjacent ends of the L-shaped heaters 23 and 20.

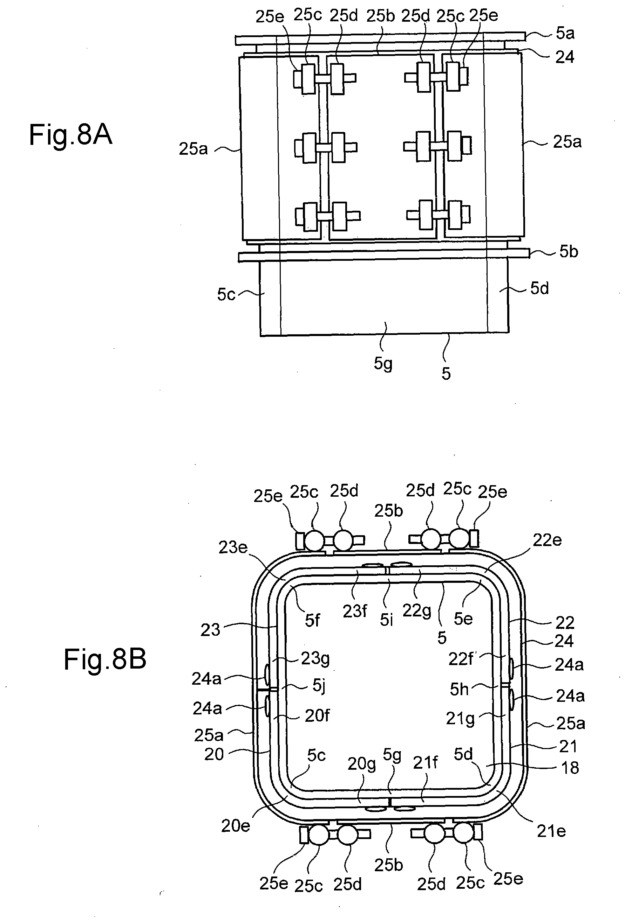

Then, as illustrated in FIGS. 8A and 8B, a fastening member 25 for attaching the L-shaped heaters 20 to 23 and the heat insulation member 24 to the fabrication container 5 is prepared.

The fastening member 25 comprises two U-shaped metal fittings 25a and two rectangular metal fittings 25b.

Among these metal fittings 25a and 25b, the U-shaped metal fittings 25a are metal fittings in a U-shape as viewed from above and are formed by bending a piece of thin sheet metal into the U-shape. Moreover, the U-shaped metal fitting 25a comprises three screwing members 25c at either end in the length direction. A screw through-hole not illustrated is provided in this screwing member 25c.

On the other hand, the rectangular metal fittings 25b are metal fittings in a rectangular shape as viewed from the side, and are formed from a piece of thin sheet metal. The rectangular metal fitting 25b also comprises three screwing members 25d at either end in the length direction. A screw through-hole not illustrated is also provided in this screwing member 25d.

In addition to the metal fittings 25a and 25b, the fastening member 25 further comprises 12 screws 25e for the screw through-holes in the screwing members 25c and the screw through-holes in the screwing members 25d.

Note that the sizes of the metal fittings 25a and 25b and the numbers of the screwing members 25c and 25d and the screws 25e are not particularly limited, and are set according to the sizes of the fabrication container 5 and the L-shaped heaters 20 to 23.

Then, the fastening member 25 is disposed at the outer side of the heat insulation member 24. For example, one U-shaped metal fitting 25a is disposed so as to cover the corner portion 5c and the corner portion 5f of the fabrication container 5 and the straight portion 5j between the corner portions 5c and 5f from outside, and the other U-shaped metal fitting 25a is disposed so as to cover the corner portion 5d and the corner portion 5e of the fabrication container 5 and the straight portion 5h between the corner portions 5d and 5e from outside. Further, one rectangular metal fitting 25b is disposed so as to cover a part of the straight portion 5g of the fabrication container 5 from outside, and the other rectangular metal fitting 25b is disposed so as to cover a part of the straight portion 5i of the fabrication container 5 from outside.

Then, one of the screws 25e are screwed into one of the screw through-holes in the screwing members 25c of the U-shaped metal fittings 25a and further screwed into the screw through-hole in the screwing member 25d of the rectangular metal fitting 25b which faces the above screwing member 25c to thereby connect the pair of screwing members 25c and 25d to each other. The remaining 11 pairs of screwing members 25c and 25d are connected in the same manner as the above with the remaining 11 screws 25e.

Thereafter, each of the 12 screws 25e is further turned to be tightened to fasten the heat insulation member 24 and the L-shaped heaters 20 to 23 with the metal fittings 25a and 25b.

As a result, the L-shaped heaters 20 to 23 are attached into contact with the outer sides of the corner portions 5c to 5f of the fabrication container 5. Moreover, the protrusions 24a of the heat insulation member 24 are pressed and squeezed against the ends of the L-shaped heaters 20 to 23 in the length direction, and further these ends of the L-shaped heaters 20 to 23 are pressed against the straight portions 5g to 5j of the fabrication container 5.

Here, in this embodiment, the radius of curvature r of the corner portions 20e to 23e of the L-shaped heaters 20 to 23 are equal to the radius of curvature R of the corner portions 5c to 5f of the fabrication container 5. Thus, as illustrated in FIG. 8B, the entire inner surfaces of the corner portions 20e to 23e of the L-shaped heaters 20 to 23 contact the outer surfaces of the corner portions 5c to 5f of the fabrication container 5. Consequently, the entire inner surfaces of the straight portions 20f to 23f and 20g to 23g of the L-shaped heaters 20 to 23 also contact the outer surfaces of the straight portions 5g to 5j of the fabrication container 5.

Note that the components of the fastening member 25 are not limited to the U-shaped metal fittings 25a, the rectangular metal fittings 25b, and the screws 25e. For example, a plurality of metallic bands each of which surrounds the sides of the fabrication container 5 may be prepared, and the fastening member 25 may be configured of these bands.

After the L-shaped heaters 20 to 23 are attached to the fabrication container 5 as described above, the L-shaped heaters 20 to 23 are electrically connected. A method for the electrical connection will be described.

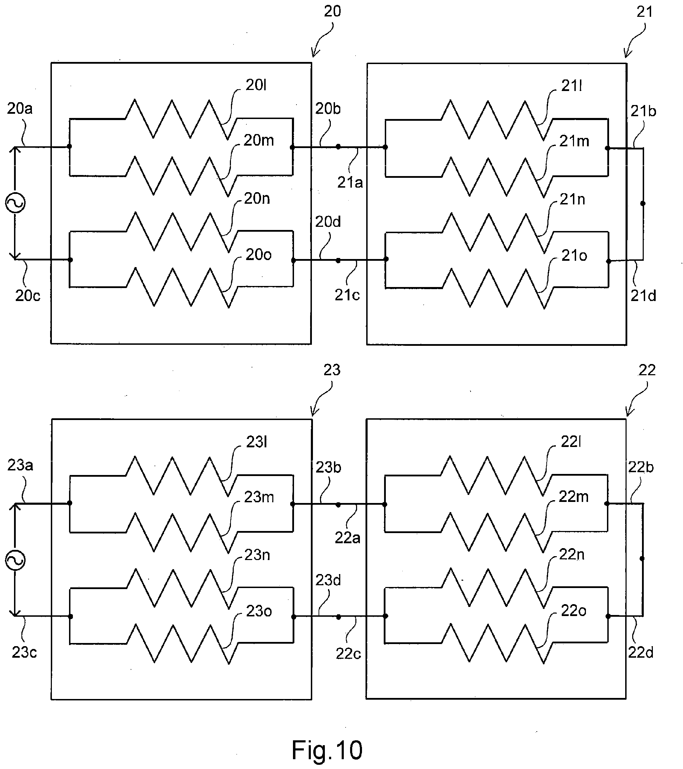

FIG. 10 is a view explaining a method of electrically connecting the L-shaped heaters 20 to 23.

As mentioned earlier, the L-shaped heater 20 comprises the four metallic wires 201 to 20o as heat generators which differ from each other in electrical resistivity.

Also, as illustrated in FIG. 10, the L-shaped heaters 21 to 23 also comprise four metallic wires 211 to 21o, 221 to 22o, and 231 to 23o as heat generators which differ from each other in electrical resistivity, like the L-shaped heater 20.

In the L-shaped heater 21, the metallic wire 211 with the highest electrical resistivity and the metallic wire 21m with the second highest electrical resistivity are connected in parallel between a cable 21a and a cable 21b. Moreover, the metallic wire 21n with the third highest electrical resistivity and the metallic wire 21o with the lowest electrical resistivity are connected in parallel between a cable 21c and a cable 21d.

In the L-shaped heater 22, the metallic wire 221 with the highest electrical resistivity and the metallic wire 22m with the second highest electrical resistivity are connected in parallel between a cable 22a and a cable 22b. Moreover, the metallic wire 22n with the third highest electrical resistivity and the metallic wire 22o with the lowest electrical resistivity are connected in parallel between a cable 22c and a cable 22d.

In the L-shaped heater 23, the metallic wire 231 with the highest electrical resistivity and the metallic wire 23m with the second highest electrical resistivity are connected in parallel between a cable 23a and a cable 23b. Moreover, the metallic wire 23n with the third highest electrical resistivity and the metallic wire 23o with the lowest electrical resistivity are connected in parallel between a cable 23c and a cable 23d.

Among the L-shaped heaters 20 to 23 with these electrical configurations, the L-shaped heater 20, which is attached to the corner portion 5c of the fabrication container 5, and the L-shaped heater 21, which is attached to the corner portion 5d, are electrically connected to each other as a pair, and the L-shaped heater 22, which is attached to the corner portion 5e, and the L-shaped heater 23, which is attached to the corner portion 5f, are electrically connected to each other as a pair.

For the pair of L-shaped heaters 20 and 21, the cable 20b of the L-shaped heater 20 and the cable 21a of the L-shaped heater 21 are connected to each other, the cable 21b and the cable 21d are connected to each other in the L-shaped heater 21, and the cable 21c of the L-shaped heater 21 and the cable 20d of the L-shaped heater 20 are connected to each other.

Also, for the pair of L-shaped heaters 22 and 23, the cable 23b of the L-shaped heater 23 and the cable 22a of the L-shaped heater 22 are connected to each other, the cable 22b and the cable 22d are connected to each other in the L-shaped heater 22, and the cable 22c of the L-shaped heater 22 and the cable 23d of the L-shaped heater 23 are connected to each other.

Further, the cable 20a and the cable 20c of the L-shaped heater 20 and the cable 23a and the cable 23c of the L-shaped heater 23 are connected to power sources not illustrated in the powder bed fusion apparatus 1.

Referring back to FIGS. 2A and 2B, the carrying plate 7 and the recoater 8 will be described.

As illustrated in FIGS. 2A and 2B, the carrying plate 7, over which the powder material is carried, is a plate-shaped member with a flat upper surface 7a and a flat lower surface 7b, and is formed from a steel sheet such as a cold-rolled steel sheet.

The carrying plate 7 is provided with three openings 7c to 7e through which the powder material is taken in and out. Among the openings 7c to 7e, in FIGS. 2A and 2B, the opening 7c on the left side and the opening 7e on the right side have the same shapes and sizes of the openings in the upper surfaces of the storage containers 3 and 4. On the other hand, the opening 7d in the center has the same shape and size as the opening in the upper surface of the fabrication container 5.

When the containers 3 to 5 are housed in the housing 2, the storage container 3 is disposed under the left opening 7c, the fabrication container 5 with the side heating unit 6 attached thereto is disposed under the center opening 7d, and the storage container 4 is disposed under the right opening 7e.

Then, the containers 3 to 5 are lifted by lifts not illustrated, so that the upper surface of the flange 3a of the storage container 3, the upper surface of the flange 5a of the fabrication container 5, and the upper surface of the flange 4a of the storage container 4 come into contact with the lower surface 7b of the carrying plate 7.

As a result, the opening 7c, the opening 7d, and the opening 7e in the carrying plate 7 communicate with the opening in the upper surface of the storage container 3, the opening in the upper surface of the fabrication container 5, and the opening in the upper plane of the storage container 4, respectively.

Then, the support rod 16, the support rod 19, and the support rod 17 are attached to the lower surface of the supply table 14 of the storage container 3, the lower surface of the modeling table 18 of the fabrication container 5, and the lower surface of the supply table 15 of the storage container 4, respectively.

This enables the supply table 14 to be raised and lowered inside the opening through the carrying plate 7 and the storage container 3, enables the modeling table 18 to be raised and lowered inside the opening through the carrying plate 7 and the fabrication container 5, and enables the supply table 15 to be raised and lowered inside the opening through the carrying plate 7 and the storage container 4.

Also, a plate-shaped electric resistance heater as the above-mentioned carrying plate heating unit not illustrated is attached to the lower surface 7b of the carrying plate 7 around the center opening 7d.

On the upper surface 7a of the carrying plate 7, on the other hand, is provided the recoater 8. The recoater 8 is an elongated plate-shaped member and is disposed on a left end portion or a right end portion of the carrying plate 7 before fabrication of a model.

The recoater 8 is connected to a driver not illustrated. As the control unit 14 drives this driver, the recoater 8 is moved leftward or rightward on the upper surface 7a of the carrying plate 7.

Next, the upper heating unit 9 and the temperature detection unit 12 will be described.

The upper heating unit 9 comprises four rod-shaped heaters 27 to 30. Each of the rod-shaped heaters 27 to 30 is an elongated cylindrical infrared heater or an electric resistance heater and, as illustrated in FIGS. 2A and 2B, installed above the carrying plate 7 and inside the sides of the fabrication container 5 so as to be parallel to one corresponding side of the sides of the fabrication container 5.

Also, the temperature detection unit 12 is a device that detects the surface temperature of the powder material inside the opening through the carrying plate 7 and the fabrication container 5 by means of infrared radiation and, as illustrated in FIGS. 2A and 2B, installed above the carrying plate 7 and inside the sides of the fabrication container 5.

The temperature detection unit 12 transmits data of the detected surface temperature to the control unit 14. The control unit 14 adjusts the amount of heat generation by the rod-shaped heaters 27 to 30 based on the surface temperature data.

Note that while a single temperature detection unit 12 is provided for the one fabrication container 5 in this embodiment, the present invention is not limited to this configuration. For example, for more accurate detection of the surface temperature of the powder material inside the openings through the carrying plate 7 and the fabrication container 5, a plurality of temperature detection units 12 may be prepared for the one fabrication container 5, and the temperature detection units 12 may be disposed at different positions above the carrying plate 7 and inside the sides of the fabrication container 5.

Next, a laser beam emission unit 13 will be described.

The laser beam emission unit 13 is a device that emits and scans a laser beam over the surface of the powder material inside the opening through the carrying plate 7 and the fabrication container 5 and, as illustrated in FIGS. 2A and 2B, installed above the carrying plate 7 and inside the sides of the fabrication container 5.

The laser beam emission unit 13, though not illustrated, comprises parts such as a light source that emits a laser beam as an energy beam, a mirror that changes the emission angle of the laser beam to scan the laser beam, a lens that changes the focal length of the laser beam to adjust it to the surface of the powder material, and drivers that drive the mirror and the lens. Among these components, the light source and the drivers are controlled by the control unit 14.

Note that while a laser beam is employed as the energy beam in this embodiment, the energy beam is not limited to it. For example, an electron beam may be employed as the energy beam.

The powder bed fusion apparatus 1 in this embodiment is configured as described above.

Next, a method of model fabrication performed in the powder bed fusion apparatus 1 in this embodiment will be described.

In the powder bed fusion apparatus 1, a buffer layer formed of a plurality of thin layers of the powder material are formed on the modeling table 18 before the start of fabrication of a model so that the model fabricated in the fabrication container 5 will not be fixedly attached to the upper surface of the modeling table 18.

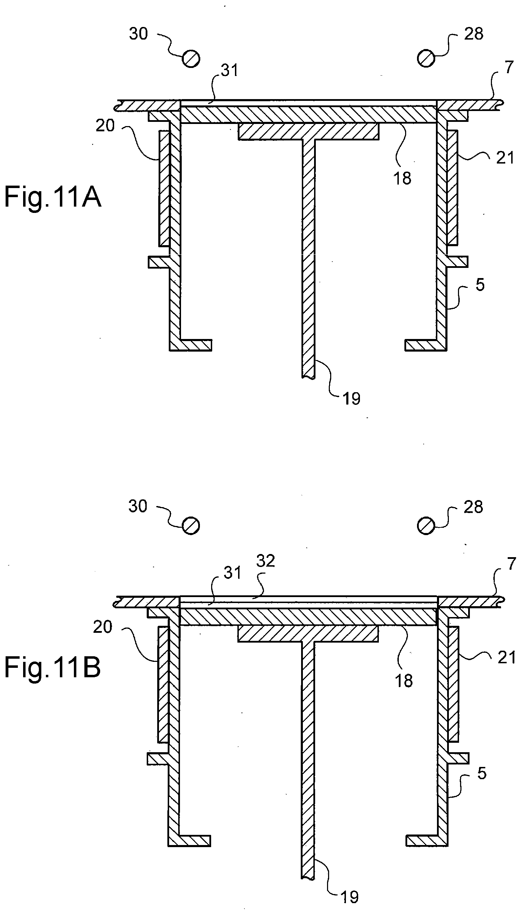

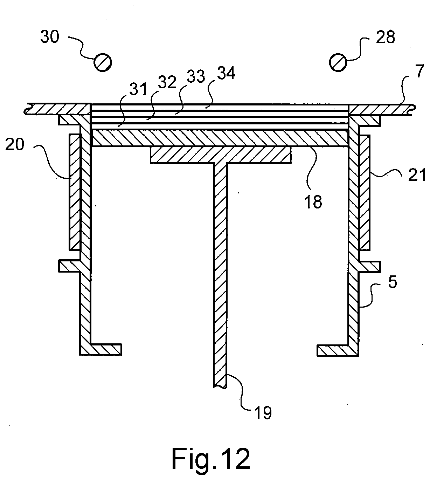

A method of forming the buffer layer will be described first. FIGS. 11A, 11B and 12 are views explaining the method of forming the buffer layer.

The powder bed fusion apparatus 1 before the formation of the buffer layer is in the state illustrated in FIGS. 2A and 2B, for example. Specifically, a powder material 26 is supplied to the storage containers 3 and 4, and the supply tables 14 and 15 are raised such that the upper surface of the powder material 26 in the opening through the carrying plate 7 and the storage container 3 and the upper surface of the powder material 26 in the opening through the carrying plate 7 and the storage container 4 are at the same height as the upper surface 7a of the carrying plate 7. Also, the modeling table 18 of the fabrication container 5 is raised such that the upper surface of the modeling table 18 is at the same height as the upper surface 7a of the carrying plate 7. Furthermore, the recoater 8 is disposed on the left end portion of the carrying plate 7.

When the powder bed fusion apparatus 1 is in such a state, the control unit 14 raises the supply table 14 of the left storage container 3 to make the powder material 26 project from the opening 7c in the carrying plate 7. Further, the control unit 14 lowers the modeling table 18 of the fabrication container 5 by the thickness of a single thin layer of the powder material 26, e.g., 0.1 mm, and also lowers the supply table 15 of the right storage container 4.

Thereafter, the control unit 14 moves the recoater 8 rightward. Thus, the recoater 8 scrapes the powder material 26 in the storage container 3 projecting from the opening 7c and carries the powder material 26 to the opening 7d over the upper surface 7a of the carrying plate 7 to supply it into the opening through the carrying plate 7 and the fabrication container 5.

As a result, a first thin layer 31 of the powder material 26 is formed on the modeling table 18, as illustrated in FIG. 11A.

For the remaining powder material 26 not used in the formation of the thin layer 31, the recoater 8 is moved further rightward to carry the powder material 26 to the opening 7e over the upper surface 7a of the carrying plate 7 to thereby store it into the opening through the carrying plate 7 and the storage container 4.

Thereafter, the control unit 14 raises the supply table 15 of the storage container 4 to make the powder material 26 project from the opening 7e of the carrying plate 7. Further, the control unit 14 lowers the modeling table 18 of the fabrication container 5 by the thickness of a single thin layer of the powder material 26, and also lowers the supply table 14 of the storage container 3.

Thereafter, the control unit 14 moves the recoater 8 leftward. Thus, the recoater 8 scrapes the powder material 26 in the storage container 4 projecting from the opening 7e and carries the powder material 26 to the opening 7d in the carrying plate 7 to supply it into the opening through the carrying plate 7 and the fabrication container 5.

As a result, a second thin layer 32 of the powder material 26 is formed on the first thin layer 31, as illustrated in FIG. 11B.

For the remaining powder material 26, the recoater 8 is moved further leftward to carry the powder material 26 to the opening 7c in the carrying plate 7 to thereby store it into the opening through the carrying plate 7 and the storage container 3.

Thereafter, in the opening through the carrying plate 7 and the fabrication container 5, a third thin layer 33 of the powder material 26 is formed on the second thin layer 32 in a similar manner to the formation of the first thin layer 31, and a fourth thin layer 34 of the powder material 26 is further formed on the third thin layer 33 in a similar manner to the formation of the second thin layer 32.

By repeating formation of a thin layer of the powder material 26 as described above, a plurality of thin layers of the powder material 26 are laminated on the modeling table 18 as illustrated in FIG. 12, so that buffer layers 31 to 34 with a predetermined thickness, e.g., 10 mm are formed in the opening through the carrying plate 7 and the fabrication container 5.

Note that FIG. 12 illustrates the four thin layers 31 to 34 of the powder material 26 as the buffer layer for convenience. The number of thin layers of the powder material 26 that form the buffer layer will be a number corresponding to the thickness of the buffer layer.

Also, at the same time as starting the formation of the buffer layers 31 to 34, the control unit 14 turns on all of the above-described heaters of the powder bed fusion apparatus 1, including the L-shaped heaters 20 to 23 of the side heating unit 6 and the rod-shaped heaters 27 to 30 of the upper heating unit 9.

Then, for the heaters of, for example, the side heating unit 6 among the above, the control unit 14 adjusts the amounts of heat generation by the L-shaped heaters 20 to 23 based on the data on the temperatures of the L-shaped heaters 20 to 23 themselves detected by the temperature sensors in the L-shaped heaters 20 to 23. Also, for the upper heating unit 9, the control unit 14 adjusts the amounts of heat generation by the rod-shaped heaters 27 to 30 based on the data on the surface temperature of the powder material 26 in the carrying plate 7 and the fabrication container 5 detected by the temperature detection unit 12. Furthermore, the control unit 14 adjusts the amounts of heat generation by the remaining heaters as well.

With these adjustments, the control unit 14 raises the temperature of the powder material 26 in the carrying plate 7 and the fabrication container 5 to a temperature suitable for starting the fabrication of a model, e.g., a temperature lower than the melting point of the powder material 26 by about 10°C to 15°C, and also maintains this suitable temperature.

For example, when PPS is used as the powder material 26, the control unit 14 raises the temperature to a suitable temperature of approximately 265 to 270°C and maintains this temperature since the melting point of PPS is approximately 280°C.

The buffer layers 31 to 34 are preheated in this manner. Note that all heaters of the powder bed fusion apparatus 1 may be turned on prior to the start of the formation of the buffer layers 31 to 34.

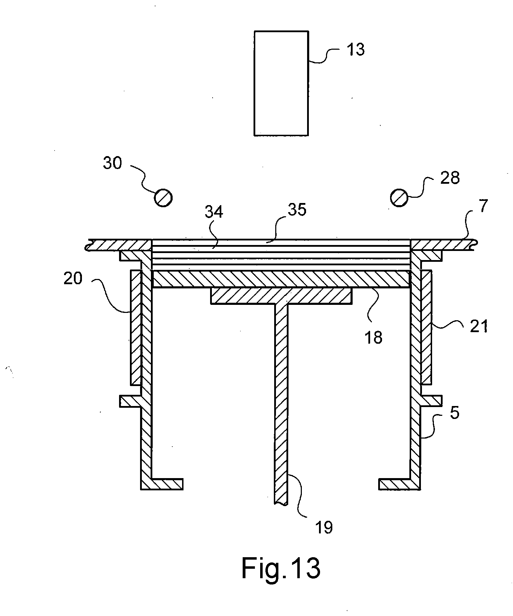

Next, a method of the model fabrication performed after the formation of the buffer layers 31 to 34 will be described. FIGS. 13 to 17 are views explaining the method of the model fabrication.

The control unit 14 preheats the powder material 26 in the carrying plate 7 and the fabrication container 5 not only during the formation of the buffer layers 31 to 34 but also during the fabrication of a model on the buffer layers 31 to 34, as will be described below.

Specifically, the control unit 14 adjusts the amounts of heat generation by all heaters of the powder bed fusion apparatus 1 so as to maintain the temperature of the powder material 26 in the carrying plate 7 and the fabrication container 5 at the above-mentioned suitable temperature.

Then, the control unit 14 raises, for example, the supply table 14 of the storage container 3 to make the powder material 26 project from the opening 7c of the carrying plate 7. Further, the control unit 14 lowers the modeling table 18 of the fabrication container 5 by the thickness of a single thin layer of the powder material 26, and also lowers the supply table 15 of the storage container 4.

Thereafter, the control unit 14 moves the recoater 8 rightward. Thus, the recoater 8 scrapes the powder material 26 in the storage container 3 projecting from the opening 7c and carries the powder material 26 to the opening 7d in the carrying plate 7 to supply it into the opening through the carrying plate 7 and the fabrication container 5.

As a result, a first thin layer 35 of the powder material 26 for the model fabrication is formed on the uppermost thin layer 34 among the buffer layers 31 to 34, as illustrated in FIG. 13.

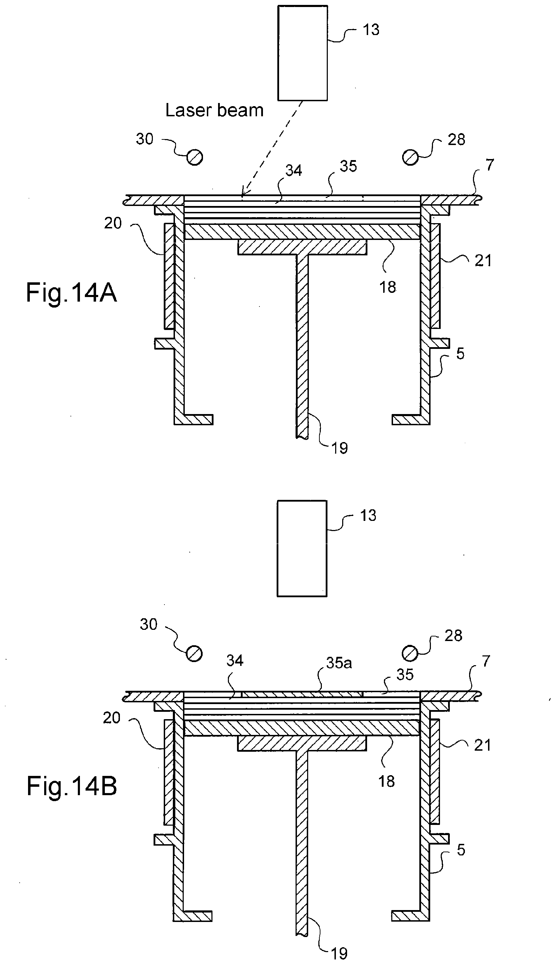

Then, based on slice data (drawing pattern) of the three-dimensional model to be fabricated, the control unit 14 controls movement of the mirror and the lens of the laser beam emission unit 13 while controlling the output of the light source to emit and scan a laser beam over the first thin layer 35 of the powder material 26 as illustrated in FIG. 14A, so that the powder material 26 in a particular region in the first thin layer 35 is fused and then solidified.

As a result, as illustrated in FIG. 14B, a first solidified layer 35a is formed at the particular region in the first thin layer 35. The control unit 14 then stops the emission and scan of the laser beam.

Thereafter, the control unit 14 raises the supply table 15 of the storage container 4 to make the powder material 26 project from the opening 7e of the carrying plate 7. Further, the control unit 14 lowers the modeling table 18 of the fabrication container 5 by the thickness of a single thin layer of the powder material 26, and also lowers the supply table 14 of the storage container 3.

Thereafter, the control unit 14 moves the recoater 8 leftward. Thus, the recoater 8 scrapes the powder material 26 in the storage container 4 projecting from the opening 7e and carries the powder material 26 to the opening 7d in the carrying plate 7 to supply it into the opening through the carrying plate 7 and the fabrication container 5.

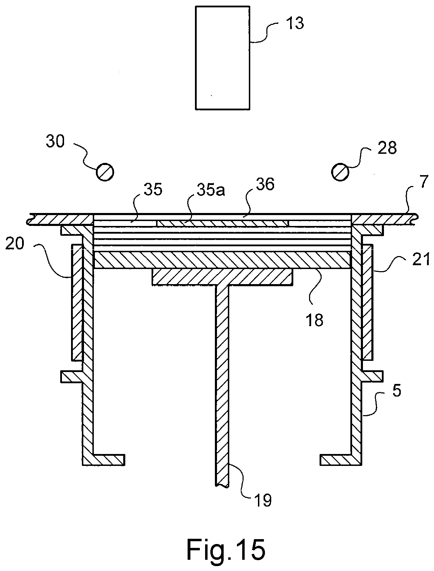

As a result, a second thin layer 36 of the powder material 26 is formed on the first thin layer 35 of the powder material 26, in which the first solidified layer 35a is formed, as illustrated in FIG. 15.

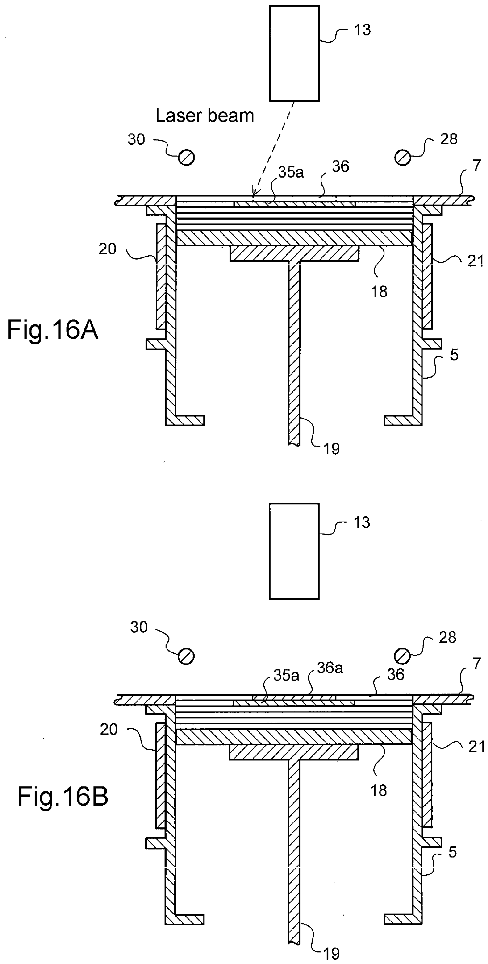

Then, the control unit 14 controls the laser beam emission unit 13 to emit and scan a laser beam over the second thin layer 36 of the powder material 26 as illustrated in FIG. 16A, so that the powder material 26 in a particular region in the second thin layer 36 is fused and then solidified.

As a result, as illustrated in FIG. 16B, a second solidified layer 36a is formed at the particular region in the second thin layer 36. The control unit 14 then stops the emission and scan of the laser beam.

Thereafter, in the opening through the carrying plate 7 and the fabrication container 5, a third thin layer 37 and solidified layer 37a of the powder material 26 are formed on the second thin layer 36 and solidified layer 36a in a similar manner to the formation of the first thin layer 35 and solidified layer 35a, and a fourth thin layer 38 and solidified layer 38a of the powder material 26 are formed on the third thin layer 37 and solidified layer 37a in a similar manner to the formation of the second thin layer 36 and solidified layer 36a.

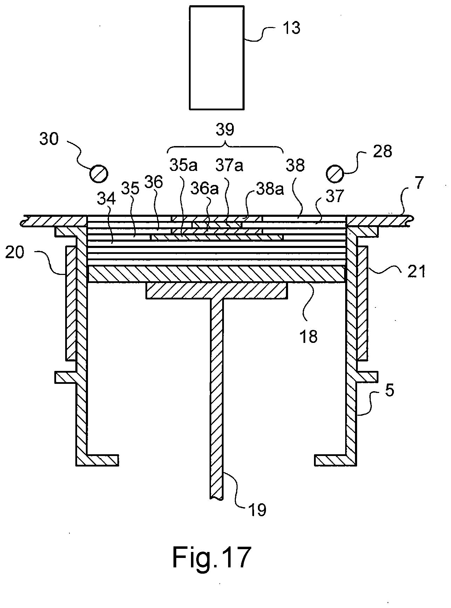

By repeating formation of a thin layer of the powder material 26 for the model fabrication and formation of a solidified layer in this thin layer as described above, the plurality of solidified layers 35a to 38a are laminated on the buffer layers 31 to 34 in the opening through the carrying plate 7 and the fabrication container 5 as illustrated in FIG. 17, so that a three-dimensional model 39 is fabricated.

After the fabrication of the model 39 ends, the control unit 14 turns off all heaters of the powder bed fusion apparatus 1.

Then, the storage containers 3 and 4 and the fabrication container 5 are taken out of the housing 2. Thereafter, the modeling table 18 of the fabrication container 5 is raised by the corresponding lift not illustrated, and the model 39 buried in the powder material 26 is taken out.

As described above, in this embodiment, the four L-shaped heaters 20 to 23 are used as the side heating unit 6. Further, the L-shaped heaters 20 to 23 are attached to the outer sides of the four corner portions 5c to 5f of the fabrication container 5, so that the sides of the fabrication container 5 are surrounded by the L-shaped heaters 20 to 23.

This makes it possible to reliably heat the powder material 26 at regions near the corner portions 5c to 5f and regions near the straight portions 5g to 5j inside the fabrication container 5, i.e., a peripheral region inside the fabrication container 5 through the sides of the fabrication container 5 during the preheating.

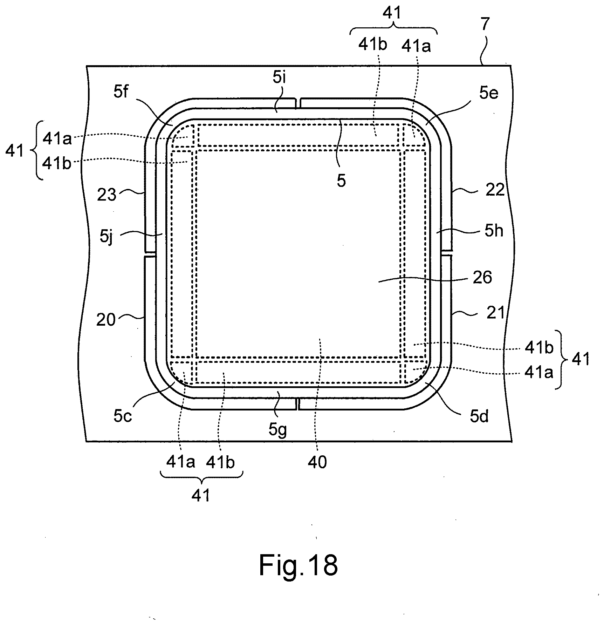

FIG. 18 is a view explaining the state of the powder material 26 in the carrying plate 7 and the fabrication container 5 in the powder bed fusion apparatus 1 in this embodiment during the preheating. Note that this FIG. 18 is a view in which the carrying plate 7 is viewed from above, and therefore the sides of the fabrication container 5 and the L-shaped heaters 20 to 23 are supposed to be not visible due to the carrying plate 7. In FIG. 18, however, the sides of the fabrication container 5 and the L-shaped heaters 20 to 23 are illustrated by solid lines to facilitate understanding of the explanation.

As mentioned earlier, the powder material 26 in the carrying plate 7 and the fabrication container 5 is preheated during the formation of the buffer layers 31 to 34 and the fabrication of the model 39.

In this preheating, the control unit 14 adjusts the amounts of heat generation by the rod-shaped heaters 27 to 30 of the upper heating unit 9 so as to directly heat the powder material 26 in the carrying plate 7 and the fabrication container 5 from above.

In this state, at a center region 40 inside the carrying plate 7 and the fabrication container 5, the temperature of the powder material 26 can be maintained at the above-mentioned suitable temperature since the powder material 26 itself has a heat insulation property.

On the other hand, at a peripheral region 41 abutting the sides of the fabrication container 5, the heat of the powder material 26 will escape through the sides of the fabrication container 5 without the L-shaped heaters 20 to 23 of the side heating unit 6 since the outer side of the fabrication container 5 is at relatively low temperature, and the temperature of the powder material 26 will therefore be lower than the temperature of the powder material 26 at the center region 40.

To address this, in this embodiment, the control unit 14 further adjusts the amounts of heat generation by the L-shaped heaters 20 to 23 so as to heat the powder material 26 at regions 41a near the corner portions 5c to 5f and regions 41b near the straight portions 5g to 5j inside the fabrication container 5, i.e., the peripheral region 41 inside the fabrication container 5 through the sides of the fabrication container 5.

In this way, in the carrying plate 7 and the fabrication container 5, the temperature of the powder material 26 at the peripheral region 41 can be brought close to the temperature of the powder material 26 at the center region 40, which is the suitable temperature. As a result, the difference in temperature between the powder material 26 at the peripheral region 41 and the powder material 26 at the center region 40 can be rendered small.

Thus, the amount of shrinkage of the solidified layers 35a to 38a occurring after the application of a laser beam to the thin layers 35 to 38 of the powder material 26 can be substantially equal between the peripheral region 41 and the center region 40 inside the carrying plate 7 and the fabrication container 5.

Therefore, in the case where a number of models 39 with the same shape and the same size are fabricated using the entire inside of the carrying plate 7 and the fabrication container 5, the sizes and shapes of the models 39 fabricated at the peripheral region 41 and the center region 40 can be substantially the same.

Also, in a case where a large model 39 is fabricated which, for example, extends from the corner portion 5c to the corner portion 5e in the carrying plate 7 and the fabrication container 5, the accuracy of the size and shape of the model 39 can be substantially the same between the regions 41a in the peripheral region 41 near the corner portion 5c and the corner portion 5e and the center region 40.

In sum, in this embodiment, a model 39 can be fabricated at the peripheral region 41 as accurately as at the center region 40.

Also, in this embodiment, the radius of curvature r of the corner portions 20e to 23e of the L-shaped heaters 20 to 23 are equal to the radius of curvature R of the corner portions 5c to 5f of the fabrication container 5.

For this reason, the entire inner surfaces of the corner portions 20e to 23e of the L-shaped heaters 20 to 23 contact the outer surfaces of the corner portions 5c to 5f of the fabrication container 5 when the L-shaped heaters 20 to 23 are attached to the corner portions 5c to 5f of the fabrication container 5 with the fastening member 25. Consequently, the entire inner surfaces of the straight portions 20f to 23f and 20g to 23g of the L-shaped heaters 20 to 23 also contact the outer surfaces of the straight portions 5g to 5j of the fabrication container 5.

In other words, a gap is not formed between the L-shaped heaters 20 to 23 and the sides of the fabrication container 5.

Such a gap is an air layer having a heat insulation property. Thus, formation of a gap between any of the L-shaped heaters 20 to 23 and the corresponding side of the fabrication container 5 means formation of a spot where the heat of the one of the L-shaped heaters 20 to 23 is not easily transferred to the sides of the fabrication container 5. This may result in unevenness in the temperature of the powder material 26 at the peripheral region 41 in the carrying plate 7 and the fabrication container 5.

Since no such gap is formed in this embodiment, the heat of the L-shaped heaters 20 to 23 is reliably transferred to the sides of the fabrication container 5.

This avoids unevenness in the temperature of the powder material 26 at the peripheral region 41 in the carrying plate 7 and the fabrication container 5.

Further, in this embodiment, when the material of the fabrication container 5 is a cold-rolled steel sheet, the fabrication container 5 and the exterior plates of the L-shaped heaters 20 to 23 are made of substantially the same material, and therefore the fabrication container 5 and the exterior plates of the L-shaped heaters 20 to 23 have substantially the same coefficient of linear expansion.

Thus, during the preheating, it is hardly likely that the L-shaped heaters 20 to 23 and the fabrication container 5 thermally expand in different amounts and therefore a gap is formed between the L-shaped heaters 20 to 23 and the sides of the fabrication container 5.

Note that if the fabrication container 5 and the L-shaped heaters 20 to 23 thermally expand in different amounts, the L-shaped heaters 20 to 23 may warp outward and therefore the ends of the L-shaped heaters 20 to 23 in the length direction may float.

In this embodiment, however, the fastening member 25 is used to attach the L-shaped heaters 20 to 23 to the sides of the fabrication container 5, as mentioned earlier. By appropriately adjusting the amount of fastening by this fastening member 25, the floating can be reduced.

Further, both ends of the L-shaped heaters 20 to 23 in the length direction are pressed against the straight portions 5g to 5j of the fabrication container 5 by the protrusions 24a of the heat insulation member 24. This can further reduce the floating.

Advantages by the embodiment described above will be further described with comparisons to configurations in first and second comparative examples below.

Firstly, the powder bed fusion apparatus in the first comparative example has basically the same configuration as that of the powder bed fusion apparatus 1 in this embodiment but differs from the powder bed fusion apparatus 1 in this embodiment in the configuration of the side heating unit and how the side heating unit is attached to the sides of the fabrication container 5.

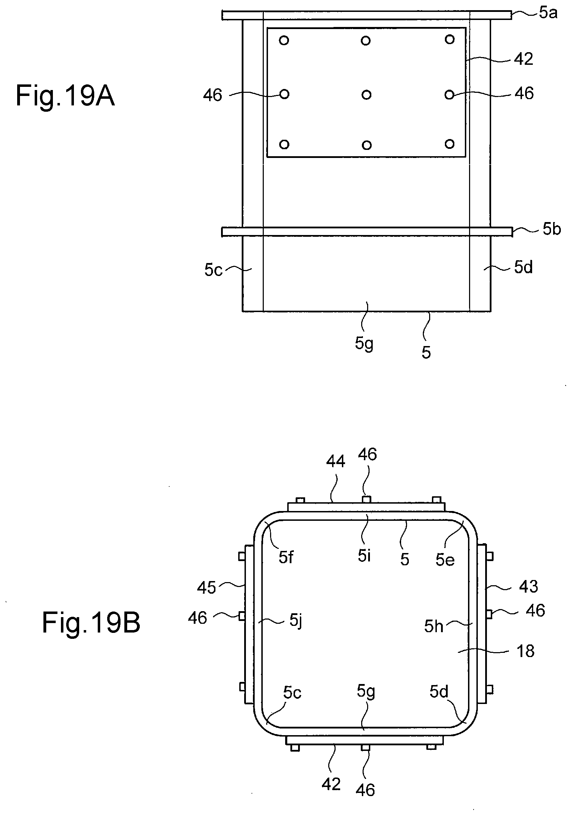

FIG. 19A is a side view illustrating the configurations of the fabrication container 5 and the side heating unit in the powder bed fusion apparatus in the first comparative example, and FIG. 19B is a top view illustrating these configurations. Note that in FIG. 19B, illustration of the flange 5a and the rib 5b of the fabrication container 5 is omitted to facilitate understanding of the explanation.

As illustrated in FIGS. 19A and 19B, the side heating unit in the first comparative example comprises four plate-shaped heaters 42 to 45.

Each of the plate-shaped heaters 42 to 45 is a plate-shaped electric resistance heater having basically the same structure as that of the plate-shaped electric resistance heaters before being processed into the L-shaped heaters 20 to 23. The plate-shaped heaters 42 to 45, however, differ from the L-shaped heaters 20 to 23 in that the metallic wires as the heat generators have a single electrical resistivity.

Moreover, the plate-shaped heaters 42 to 45 are attached in contact with the outer sides of the straight portions 5g to 5j on the upper side of the fabrication container 5 by a plurality of screws 46.

In the powder bed fusion apparatus in the first comparative example with this configuration, the powder material 26 in the carrying plate 7 and the fabrication container 5 is preheated, like the powder bed fusion apparatus 1 in this embodiment.

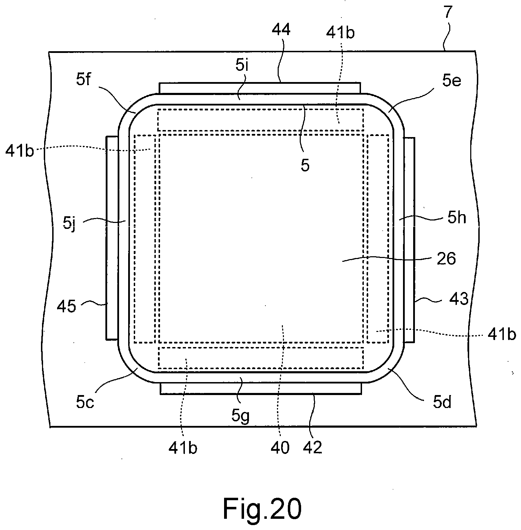

FIG. 20 is a view explaining the state of the powder material 26 in the carrying plate 7 and the fabrication container 5 in the powder bed fusion apparatus in the first comparative example during the preheating. Note that in this FIG. 20 too, the sides of the fabrication container 5 and the plate-shaped heaters 42 to 45 are illustrated by solid lines to facilitate understanding of the explanation, like FIG. 18.

In this preheating, the control unit 14 adjusts the amounts of heat generation by the rod-shaped heaters 27 to 30 of the upper heating unit 9 and the amounts of heat generation by the plate-shaped heaters 42 to 45 of the side heating unit so as to heat the powder material 26 in the carrying plate 7 and the fabrication container 5.

In this way, the temperature of the powder material 26 in the carrying plate 7 and the fabrication container 5 at the center region 40 and the regions 41b in the peripheral region 41 near the straight portions 5g to 5j can be maintained at the suitable temperature.

On the other hand, at the regions in the peripheral region 41 near the corner portions 5c to 5f of the fabrication container 5, the heat of the powder material 26 escapes to the outside of the fabrication container 5 through the corner portions 5c to 5f since the corner portions 5c to 5f are not equipped with a heater and are therefore exposed.

To reduce the escape of the heat of the powder material 26, one may consider preparing a belt-shaped heat insulation member like the heat insulation member 24 illustrated in FIG. 9, and attaching it to the outer sides of the sides of the fabrication container 5 around the plate-shaped heaters 42 to 45.

Here, attaching the heat insulation member as described above may reduce the escape of the heat of the powder material 26 but cannot completely prevent it.

Thus, with the first comparative example, it is difficult to bring the temperature of the powder material 26 at the regions in the peripheral region 41 near the corner portions 5c to 5f close to the temperature of the powder material 26 at the center region 40.

This difficulty is prominent when a high melting-point powder material such as PPS is used as the powder material 26. This is because the upper limit use temperature of the electric resistance heaters forming the plate-shaped heaters 42 to 45 is approximately 200°C, and is lower than the melting point of PPS, which is approximately 280°C, and also is lower than the temperature suitable for use of PPS, which is approximately 265 to 270°C.

In this embodiment, on the other hand, the L-shaped heaters 20 to 23 are attached to the outer sides of the corner portions 5c to 5f of the fabrication container 5, as illustrated in FIG. 18. Thus, in the powder material 26 at the peripheral region 41, the temperature of the powder material 26 at not only the regions 41b near the straight portions 5g to 5j but also the regions 41a near the corner portions 5c to 5f can be brought close to the temperature of the powder material 26 at center region 40.

Hence, the accuracy of the size and shape of models 39 fabricated at the regions 41a near the corner portions 5c to 5f can be close to the accuracy of the size and shape of a model 39 fabricated at the center region 40.

This means that, in this embodiment, the area in the carrying plate 7 and the fabrication container 5 where models 39 can be fabricated is larger than that in the first comparative example by the regions 41a near the corner portions 5c to 5f.

Moreover, this embodiment has the following advantages over the first comparative example as well.

In the first comparative example, the plate-shaped heaters 42 to 45 only cover upper portions of the sides of the fabrication container 5, as illustrated in FIG. 19A.

Further, as mentioned above, the metallic wires as the heat generators in each of the plate-shaped heaters 42 to 45 have a single electrical resistivity, so that the amount of heat generation by each of the plate-shaped heaters 42 to 45 is fixed in the width direction.

For this reason, in the fabrication of models 39, the temperature of the solidified layers 35a to 38a at the peripheral region 41 in the fabrication container 5 drops drastically when the position of the solidified layers 35a to 38a in the fabrication container 5 is lowered to the portions of the sides of the fabrication container 5 not covered with the plate-shaped heaters 42 to 45 from the portions covered with the plate-shaped heaters 42 to 45 as a result of lowering the modeling table 18.

The amount of shrinkage of the solidified layers 35a to 38a will be larger than the designed amount of shrinkage if the temperature of the solidified layers 35a to 38a drops drastically while the solidified layers 35a to 38a are not completely solidified.

This may result in a reduction in dimensions of models 39 fabricated at the peripheral region 41 in the fabrication container 5 from the designed dimensions, and/or warpage of the models 39.

Moreover, the drastic drop in the temperature of the solidified layers 35a to 38a may also result in solidification of the resin of the solidified layers 35a to 38a in a crystalline state different from the designed crystalline state.

Consequently, the strength of the models 39 fabricated at the peripheral region 41 in the fabrication container 5 may decrease to below the designed strength.

In this embodiment, on the other hand, the plurality of regions 20h, 20i, 20j, and 20k are formed in the L-shaped heater 20, across which the amount of heat generation is smaller at a lower position in the width direction, as illustrated in FIG. 4. Moreover, like the L-shaped heater 20, a plurality of regions also are formed in the L-shaped heaters 21 to 23 across which the amount of heat generation is smaller at a lower position in the width direction.

Further, among the plurality of regions differing in amount of heat generation in each of the L-shaped heaters 20 to 23, the uppermost region with the largest amount of heat generation (e.g., the region 20h for the L-shaped heater 20) is disposed on the flange 5a side of the fabrication container 5 and the lowermost region with the smallest amount of heat generation (e.g., the region 20k for the L-shaped heater 20) is disposed on the rib 5b side.

For this reason, when each of the L-shaped heaters 20 to 23 is attached to the corresponding side of the fabrication container 5, the amount of heat generation is smaller at a lower position in the height direction of the fabrication container 5.

Thus, as the position of the solidified layers 35a to 38a is lowered inside the fabrication container 5 during the fabrication of models 39, the temperature of the solidified layers 35a to 38a drops gradually inside the portions of the sides of the fabrication container 5 covered with the L-shaped heaters 20 to 23.

In this way, the temperature of the solidified layers 35a to 38a at the peripheral region 41 in the fabrication container 5 does not drop drastically when the position of the solidified layers 35a to 38a in the fabrication container 5 is lowered to the portions not covered with the L-shaped heaters 20 to 23 from the portions covered with the L-shaped heaters 20 to 23.

It is therefore possible to suppress the reduction in dimensions of models 39 fabricated at the peripheral region 41 in the fabrication container 5 from the designed dimensions, and/or the warpage of the models 39.

It is also possible to avoid the decrease in the strength of the models 39 fabricated at the peripheral region 41 in the fabrication container 5 to below the designed strength.

Note that in the first comparative example, one may consider increasing the width of the plate-shaped heaters 42 to 45 to downwardly extend the regions in the sides of the fabrication container 5 covered with the plate-shaped heaters 42 to 45 for complete solidification of the solidified layers 35a to 38a.

However, if the width of the plate-shaped heaters 42 to 45 is thus increased, it will take a long time for the temperature of the powder material 26 in the fabrication container 5 to drop to a temperature low enough to take the model(s) 39 out of the fabrication container 5 after the fabrication of the model 39 ends and all heaters of the powder bed fusion apparatus 1 are turned off.

In this embodiment, on the other hand, the amount of heat generation in each of the L-shaped heaters 20 to 23 is smaller at a lower position in the width direction. Thus, the temperature of the powder material 26 in the fabrication container 5 drops quickly after all heaters of the powder bed fusion apparatus 1 are turned off as compared to a case where the amount of heat generation is fixed in the width direction like the plate-shaped heaters 42 to 45 in the first comparative example.

This also brings about the advantage that the model 39 can be taken out of the fabrication container 5 in a shorter time.

Next, the powder bed fusion apparatus in the second comparative example also has basically the same configuration as that of the powder bed fusion apparatus 1 in this embodiment but differs from the powder bed fusion apparatus 1 in this embodiment in the configuration of the side heating unit and how the side heating unit surrounds the fabrication container 5.

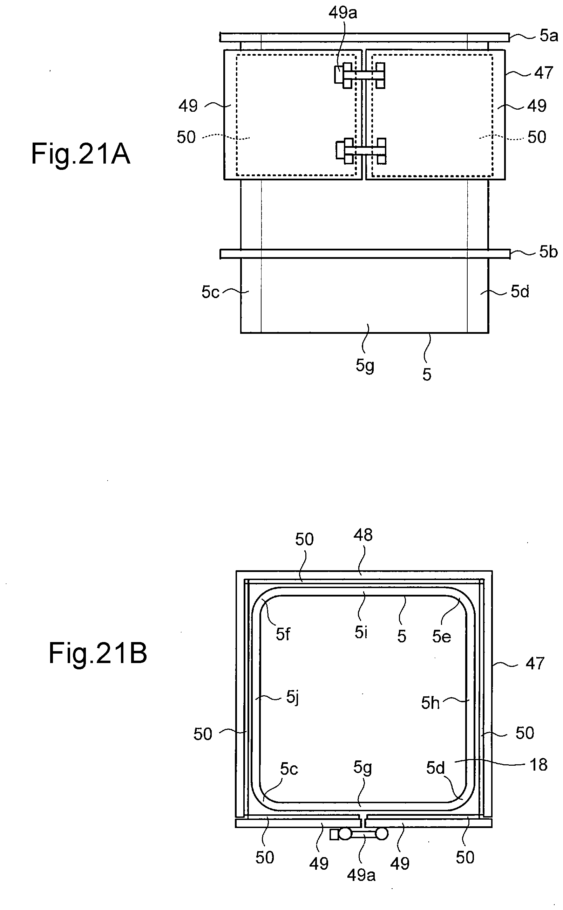

FIG. 21A is a side view illustrating the configurations of the fabrication container 5 and the side heating unit in the powder bed fusion apparatus in the second comparative example, and FIG. 21B is a top view illustrating these configurations. Note that in FIG. 21B, illustration of the flange 5a and the rib 5b of the fabrication container 5 is omitted to facilitate understanding of the explanation.

As illustrated in FIGS. 21A and 21B, the side heating unit in the second comparative example is a tubular heater unit 47 having a square shape as viewed from above and having an opening in the upper surface and the lower surface.

The heater unit 47 comprises: a metallic body 48 in a U-shape as viewed from above; metallic hinged double doors 49 covering the lateral opening portion of the body 48; and planar heaters 50 attached to the substantially entire inner side surfaces of the body 48 and the doors 49. This planar heater 50 is, for example, a silicone rubber heater with a heat generator sandwiched between two sheets of silicone rubber.

The size of the heater unit 47 is set according to the size of the fabrication container 5. For example, in consideration of a manufacturing error of the fabrication container 5, the length of each of edges of the heater unit 47 is slightly longer than the length L of a side of the fabrication container 5.

This heater unit 47 is installed inside the housing 2 of the powder bed fusion apparatus. To house the fabrication container 5 into the housing 2, the doors 49 of the heater unit 47 are opened, and the fabrication container 5 is disposed into the body 48. Then, the doors 49 are closed, and the doors 49 are locked with locking members 49a on the doors 49.

As a result, the sides of the fabrication container 5 are surrounded by the planar heaters 50 of the heater unit 47.

In the powder bed fusion apparatus in the second comparative example with this configuration, the powder material 26 in the carrying plate 7 and the fabrication container 5 is preheated, like the powder bed fusion apparatus 1 in this embodiment.

In this preheating, the control unit 14 adjusts the amounts of heat generation by the rod-shaped heaters 27 to 30 of the upper heating unit 9 and the amount of heat generation by the planar heaters 50 of the side heating unit so as to heat the powder material 26 in the carrying plate 7 and the fabrication container 5.

As mentioned above, in the second comparative example, in consideration of a manufacturing error of the fabrication container 5, the heater unit 47 is formed slightly larger than the sides of the fabrication container 5.

For this reason, a gap will be formed somewhere on a side of the fabrication container 5 between the fabrication container 5 and the planar heaters 50 even if the position inside the heater unit 47 where the fabrication container 5 is disposed is adjusted.

This may result in unevenness in the temperature of the powder material 26 at the peripheral region 41 in the carrying plate 7 and the fabrication container 5.

In this embodiment, on the other hand, as illustrated in FIGS. 8A and 8B, the four L-shaped heaters 20 to 23 are used as the side heating unit 6. Further, the L-shaped heaters 20 to 23 are attached to the outer sides of the four corner portions 5g to 5j of the fabrication container 5 by the fastening member 25, so that the sides of the fabrication container 5 are surrounded by the L-shaped heaters 20 to 23.

Thus, even when the fabrication container 5 has a manufacturing error, the manufacturing error is absorbed to some extent by the L-shaped heaters 20 to 23 and the fastening member 25. This suppresses formation of a gap between the sides of the fabrication container 5 and the L-shaped heaters 20 to 23.

This in turn suppresses unevenness in the temperature of the powder material 26 at the peripheral region 41 in the carrying plate 7 and the fabrication container 5.

### (Modification 1)

In the first embodiment, as illustrated in FIGS. 2A and 2B, each of the rod-shaped heaters 27 to 30 of the upper heating unit 9 is disposed above the carrying plate 7 and inside the sides of the fabrication container 5 so as to be parallel to one corresponding side of the sides of the fabrication container 5.

Each of the rod-shaped heaters 27 to 30 is provided with a terminal and the like at either end in the length direction. For this reason, the ends of the rod-shaped heaters 27 to 30 are non-heat generation portions.

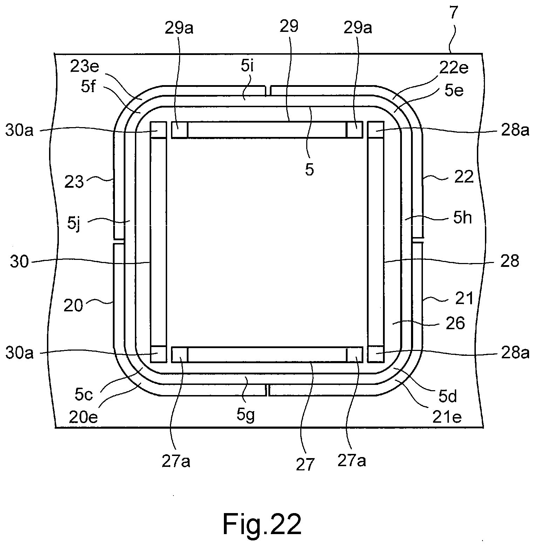

FIG. 22 is a view explaining the positional relation between the non-heat generation portions of the rod-shaped heaters 27 to 30 and the sides of the fabrication container 5. Note that in this FIG. 22, the sides of the fabrication container 5 and the L-shaped heaters 20 to 23 are illustrated by solid lines to facilitate understanding of the explanation, like FIG. 18.

As illustrated in FIG. 22, both ends of each of the rod-shaped heaters 27 to 30 in the length direction are non-heat generation portions 27a to 30a. Moreover, the non-heat generation portions 27a to 30a are located closer to the corner portions 5c to 5f of the sides of the fabrication container 5 than to the straight portions 5g to 5j.

For this reason, in the powder material 26 at the peripheral region 41 in the carrying plate 7 and the fabrication container 5, the powder material 26 at the regions 41a near the corner portions 5c to 5f may be lower in temperature than the powder material 26 at the regions 41b near the straight portions 5g to 5j.

To address this, in modification 1, the outer surfaces of the corner portions 5c to 5f of the fabrication container 5 and the inner surfaces of the corner portions 20e to 23e of the L-shaped heaters 20 to 23 to be in contact with these outer surfaces are polished with fine sandpaper, abrasive sponge, or the like.

This allows better contact between the outer surfaces of the corner portions 5c to 5f of the fabrication container 5 and the inner surfaces of the corner portions 20e to 23e of the L-shaped heaters 20 to 23 and thus enables more reliable transfer of the heat of the L-shaped heaters 20 to 23 to the corner portions 5c to 5f of the fabrication container 5.

Hence, in the powder material 26 at the peripheral region 41 in the carrying plate 7 and the fabrication container 5, the temperature of the powder material 26 at the regions 41a near the corner portions 5c to 5f can be brought close to the temperature of the powder material 26 at the regions 41b near the straight portions 5g to 5j even when the temperature of the powder material 26 at the regions 41a near the corner portions 5c to 5f falls below the temperature of the powder material 26 at the regions 41b near the straight portions 5g to 5j due to the non-heat generation portions 27a to 30a of the rod-shaped heaters 27 to 30.

### (Modification 2)

In the first embodiment, the plurality of regions 20h to 20k are formed in the L-shaped heater 20 of the side heating unit 6, which are arranged side by side in the width direction and differ from each other in amount of heat generation, as illustrated in FIG. 4.

In modification 2, on the other hand, in each L-shaped heater of the side heating unit, a plurality of regions differing from each other in amount of heat generation are formed side by side not only in the width direction but also in the length direction.

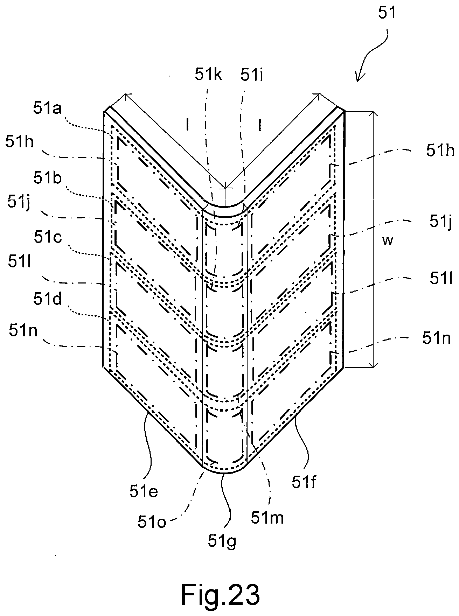

FIG. 23 is a perspective view illustrating the configuration of an L-shaped heater in modification 2. This FIG. 23 exemplarily illustrates the configuration of an L-shaped heater 51 being one of the four L-shaped heaters.

As illustrated in FIG. 23, the L-shaped heater 51 has basically the same configuration as that of the L-shaped heater 20 illustrated in FIG. 4.

However, in the L-shaped heater 51, a plurality of regions 51a to 51d are formed across which the amount of heat generation is smaller at a lower position in the width direction, as illustrated by the dashed lines in FIG. 23, and in each of the plurality of regions 51a to 51d, there are also formed, along the length direction, regions corresponding to straight portions 51e and 51f and a region corresponding to the corner portion 51g and being larger in amount of heat generation than these regions, as illustrated by the alternate long and short dash line.

For example, in the uppermost region 51a in the width direction of the L-shaped heater 51, there are formed, along the length direction, regions 51h corresponding to the straight portions 51e and 51f and a region 51i corresponding to the corner portion 51g and being larger in amount of heat generation than the regions 51h.

In the second region 51b from the top, there are formed, along the length direction, regions 51j corresponding to the straight portions 51e and 51f and a region 51k corresponding to the corner portion 51g and being larger in amount of heat generation than the regions 51j.

In the third region 51c from the top, there are formed, along the length direction, regions 511 corresponding to the straight portions 51e and 51f and a region 51m corresponding to the corner portion 51g and being larger in amount of heat generation than the regions 511.

Lastly, in the lowermost region 51d, there are formed, along the length direction, regions 51n corresponding to the straight portions 51e and 51f and a region 51o corresponding to the corner portion 51g and being larger in amount of heat generation than the regions 51n.

The plurality of regions 51h to 51o differing in amount of heat generation are formed by preparing a plurality of metallic wires as heat generators differing in electrical resistivity and disposing these metallic wires in the regions 51h to 51o in the L-shaped heater 51 according to a preset distribution of heat generation amount, like the regions 20h to 20k in the L-shaped heater 20.

Meanwhile, the other three L-shaped heaters also have the same configuration as that of the L-shaped heater 51.

As described above, in modification 2, in the length direction of the L-shaped heater 51, the amount of heat generation by the regions 51i, 51k, 51m, and 51o, which correspond to the corner portion 51g, is larger than the amount of heat generation by the regions 51h, 51j, 511, and 51n, which correspond to the straight portions 51e and 51f.

Hence, in the powder material 26 at the peripheral region 41 in the carrying plate 7 and the fabrication container 5, the temperature of the powder material 26 at the regions 41a near the corner portions 5c to 5f can be brought close to the temperature of the powder material 26 at the regions 41b near the straight portions 5g to 5j even when the temperature of the powder material 26 at the regions 41a near the corner portions 5c to 5f falls below the temperature of the powder material 26 at the regions 41b near the straight portions 5g to 5j due to the non-heat generation portions 27a to 30a of the rod-shaped heaters 27 to 30.

### (Second Embodiment)

While the side heating unit 6 is configured of the L-shaped heaters 20 to 23 in the first embodiment, the side heating unit is configured of rod-shaped heaters and plate-shaped heaters in this embodiment.

The powder bed fusion apparatus in this embodiment has basically the same configuration as that of the powder bed fusion apparatus 1 in the first embodiment except the configuration of the fabrication container, the configuration of the side heating unit, and how the side heating unit is attached to the sides of the fabrication container.

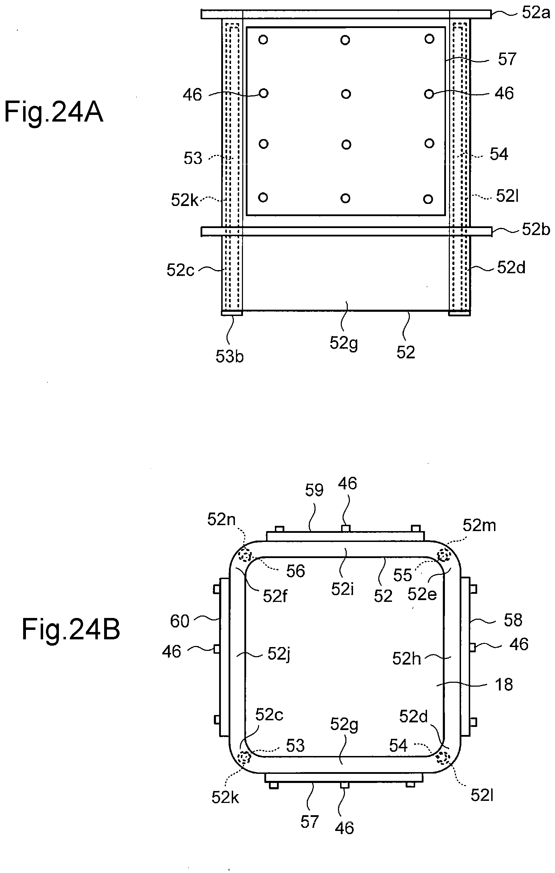

FIG. 24A is a side view illustrating the configurations of the fabrication container and the side heating unit in the powder bed fusion apparatus in this embodiment, and FIG. 24B is a top view illustrating these configurations.

Firstly, as illustrated in FIGS. 24A and 24B, a fabrication container 52 in this embodiment has the same shape as that of the fabrication container 5 in the first embodiment.

Specifically, the fabrication container 52 is a tubular container having a substantially square shape as viewed from above and having an opening the upper surface and the lower surface. Like the fabrication container 5, this fabrication container 52 is also formed by performing processes such as bending and welding on a cold-rolled steel sheet or a sheet of a metal such as an aluminum alloy.

Also, a flange 52a is attached to the upper surface of the fabrication container 52, and a rib 52b is attached between the upper surface and the lower surface of the fabrication container 52. Note that in FIG. 24B, illustration of the flange 52a and the rib 52b is omitted to facilitate understanding of the explanation.

Further, each of the four corners of the sides of the fabrication container 52 is rounded. Hereinafter, the rounded portions of the sides of the fabrication container 52 will be referred to as corner portions 52c to 52f. Moreover, the straight portions excluding the corner portions 52c to 52f will be referred to as straight portions 52g to 52j.

Also, the fabrication container 52 has the same size as the size of the fabrication container 5 described in the first embodiment.

However, unlike the fabrication container 5, the fabrication container 52 is provided with circular holes 52k to 52n, each of which is bored in one corresponding lower surface of the lower surfaces of the corner portions 52c to 52f from the lower side toward the upper side, as illustrated in FIGS. 24A and 24B. In consideration of manufacturing errors of the later-described rod-shaped heaters, the inner diameter of these holes 5k to 5n is slightly larger than the outer diameter of the rod-shaped heaters.

Also, though not illustrated, screw holes for attaching the rod-shaped heaters are provided near the holes 52k to 52n in the lower surface of the fabrication container 52. Further, screw holes for attaching the later-described plate-shaped heaters are provided in the straight portions 52g to 52j of the sides of the fabrication container 52.

Next, as illustrated in FIGS. 24A and 24B, the side heating unit in this embodiment comprises four rod-shaped heaters 53 to 56 and four plate-shaped heaters 57 to 60.

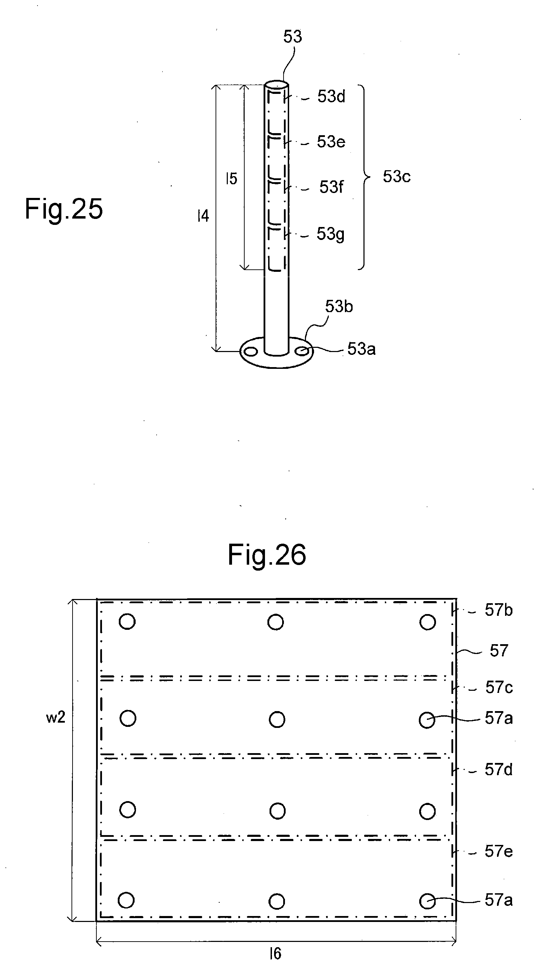

FIG. 25 is a perspective view illustrating the configuration of a rod-shaped heater. This FIG. 25 exemplarily illustrates the configuration of the rod-shaped heater 53 among the rod-shaped heaters 53 to 56. Also, FIG. 26 is a side view illustrating the configuration of a plate-shaped heater. This FIG. 26 exemplarily illustrates the configuration of the plate-shaped heater 57 among the plate-shaped heaters 57 to 60.

As illustrated in FIG. 25, the rod-shaped heater 53 is an elongated cylindrical heater. This cylindrical heater is an electric resistance heater formed by winding metallic wires such as nichrome wires as heat generators around the periphery of a cylindrical electric insulator, and covering the periphery of the electric insulator and the metallic wires with a thin cylindrical exterior cover made of stainless steel.

The rod-shaped heater 53 is provided at its lower surface with a flange 53b with screw through-holes 53a for attaching the rod-shaped heater 53 to the fabrication container 5.

The size of the rod-shaped heater 53 is set according to the size of the fabrication container 52. For example, a length 14 of the rod-shaped heater 53 is slightly shorter than the height of the sides of the fabrication container 52 and is 465 mm.

Also, a portion of the rod-shaped heater 53 on the upper surface side is a heat generation portion 53c. A length 15 of the heat generation portion 53c is not particularly limited but, in this embodiment, is 300 mm, which is equal to the width of the later-described plate-shaped heater 57.

In the heat generation portion 53c of the rod-shaped heater 53, a plurality of regions 53d to 53g are formed which are arranged side by side in the length direction and differ from each other in amount of heat generation, as illustrated by the alternate long and short dash line in FIG. 25. The plurality of regions 53d to 53g are such that the amount of heat generation gets smaller from the uppermost region 53d toward the lowermost region 53g in the length direction of the rod-shaped heater 53.

The plurality of regions 53d to 53g are formed by preparing a plurality of metallic wires as heat generators differing in electrical resistivity and disposing these metallic wires in the regions 53d to 53g in the heat generation portion 53c of the rod-shaped heater 53 according to a preset distribution of heat generation amount, like the plurality of regions 20h to 20k in the L-shaped heater 20 in the first embodiment.

Meanwhile, the other rod-shaped heaters 54 to 56 also have the same configuration as that of the rod-shaped heater 53.

The plate-shaped heater 57, on the other hand, is a plate-shaped heater, as illustrated in FIG. 26. This plate-shaped heater is an electric resistance heater having the same structure as that of the plate-shaped electric resistance heater before being processed into the L-shaped heater 20.

The plate-shaped heater 57 is provided with a plurality of screw through-holes 57a for attaching the plate-shaped heater 57 to a side of the fabrication container 52.

The size of the plate-shaped heater 57 is set according to the size of the fabrication container 52. For example, a length 16 of the plate-shaped heater 57 is slightly shorter than the length of the side of the fabrication container 52 and is 280 mm. Also, a width w2 is slightly shorter than the length of the fabrication container 52 between the flange 52a and the rib 52b and is 300 mm.

Furthermore, in the plate-shaped heater 57, a plurality of regions 57b to 57e are formed which are arranged side by side in the width direction and differ from each other in amount of heat generation, as illustrated by the alternate long and short dash line in FIG. 26. The plurality of regions 57b to 57e are such that are such that the amount of heat generation gets smaller from the uppermost region 57b toward the lowermost region 57e in the width direction of the plate-shaped heater 57.

The other plate-shaped heaters 58 to 60 also have the same configuration as that of the plate-shaped heater 57.

These rod-shaped heaters 53 to 56 and plate-shaped heaters 57 to 60 are attached to the sides of the fabrication container 52 in the following way.

As illustrated in FIGS. 24A and 24B, among the rod-shaped heaters 53 to 56, the rod-shaped heater 53 is inserted in the hole 52k in the fabrication container 52, the rod-shaped heater 54 is inserted in the hole 521, the rod-shaped heater 55 is inserted in the hole 52m, and the rod-shaped heater 56 is inserted in the hole 52n.

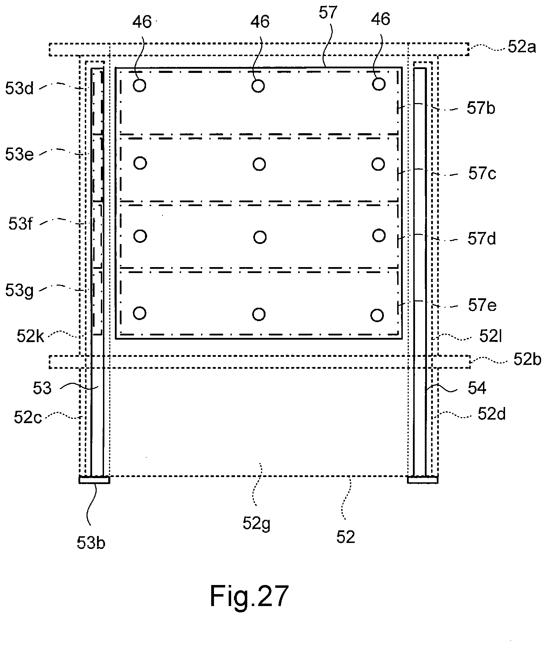

FIG. 27 is a view illustrating the positions of the plurality of regions 53d to 53g in the rod-shaped heater 53, which differ in amount of heat generation, and the positions of the plurality of regions 57b to 57e in the plate-shaped heater 57, which differ in amount of heat generation, in and on a side of the fabrication container 52. Note that this FIG. 27 illustrates the fabrication container 52 with dotted lines and illustrates the rod-shaped heater 53 and the plate-shaped heater 57 with solid lines in order to facilitate understanding of the explanation.

As illustrated in FIG. 27, among the plurality of regions differing in amount of heat generation in each of the rod-shaped heaters 53 to 56, the uppermost region with the largest amount of heat generation (e.g., the region 53d for the rod-shaped heater 53) is disposed on the flange 52a side of the fabrication container 52 and the lowermost region with the smallest amount of heat generation (e.g., the region 53g for the rod-shaped heater 53) is disposed on the rib 52b side when the rod-shaped heaters 53 to 56 are inserted in the holes 52k to 52n in the fabrication container 52.

Then, screws not illustrated are screwed into the screw holes in the lower surface of the fabrication container 52 through the screw through holes in the flanges of the rod-shaped heaters 53 to 56 (e.g., the screw through hole 53a in the flange 53b for the rod-shaped heater 53) to thereby attach the rod-shaped heaters 53 to 56 in the holes 52k to 52n in the fabrication container 52.

When the rod-shaped heaters 53 to 56 are attached to the fabrication container 52, the outer surfaces of the rod-shaped heaters 53 to 56 are in contact with at least portions of the inner surfaces of the holes 52k to 52n, e.g., portions of the inner surfaces of the holes 52k to 52n on the opening (modeling table 18) side of the fabrication container 52, as illustrated in FIGS. 24A and 24B.

Also, as illustrated in FIGS. 24A and 24B, among the plate-shaped heaters 57 to 60, the plate-shaped heater 57 is disposed on the straight portion 52g, the plate-shaped heater 58 is disposed on the straight portion 52h, the plate-shaped heater 59 is disposed on the straight portion 52i, and the plate-shaped heater 60 is disposed on the straight portion 52j between the flange 52a and the rib 52b of the fabrication container 52.

Further, among the plurality of regions differing in amount of heat generation in each of the plate-shaped heaters 57 to 60, the uppermost region with the largest amount of heat generation (e.g., the region 57b for the plate-shaped heater 57) is disposed on the flange 52a side of the fabrication container 52 and the lowermost region with the smallest amount of heat generation (e.g., the region 57e for the plate-shaped heater 57) is disposed on the rib 52b side, as illustrated in FIG. 27.

Then, screws 46 are screwed into the screw holes in the sides of the fabrication container 52 through the screw through-holes in the plate-shaped heaters 57 to 60 (e.g., the screw through-holes 57a for the plate-shaped heater 57) to thereby attach the plate-shaped heaters 57 to 60 into contact with the outer sides of the straight portions 52g to 52j on the upper side of the fabrication container 52.

When the rod-shaped heaters 53 to 56 and the plate-shaped heaters 57 to 60 are attached to the sides of the fabrication container 52 as described above, the plurality of regions differing in amount of heat generation in each of the rod-shaped heaters 53 to 56 and the plurality of regions differing in amount of heat generation in each of the plate-shaped heaters 57 to 60 are at the same position in the height direction of the fabrication container 52.

For example, as illustrated in FIG. 27, the region 53d with the largest amount of heat generation in the rod-shaped heater 53 and the region 57b with the largest amount of heat generation in the plate-shaped heater 57 are at the same position in the height direction of the fabrication container 52. The region 53e with the second largest amount of heat generation in the rod-shaped heater 53 and the region 57c with the second largest amount of heat generation in the plate-shaped heater 57 are at the same position in the height direction of the fabrication container 52. The region 53f with the third largest amount of heat generation in the rod-shaped heater 53 and the region 57d with the third largest amount of heat generation in the plate-shaped heater 57 are at the same position in the height direction of the fabrication container 52. Lastly, the region 53g with the smallest amount of heat generation in the rod-shaped heater 53 and the region 57e with the smallest amount of heat generation in the plate-shaped heater 57 are at the same position in the height direction of the fabrication container 52.

Further, though not illustrated, a belt-shaped heat insulation member like the heat insulation member 24 illustrated in FIG. 9 is attached to the outer sides of the sides of the fabrication container 52 so as to surround the rod-shaped heaters 53 to 56 and the plate-shaped heaters 57 to 60.

In the powder bed fusion apparatus in this embodiment with the above configuration, the powder material 26 in the carrying plate 7 and the fabrication container 52 is preheated, like the powder bed fusion apparatus 1 in the first embodiment.

In this preheating, the control unit 14 adjusts the amounts of heat generation by the rod-shaped heaters 27 to 30 of the upper heating unit 9 and the amounts of heat generation by the rod-shaped heaters 53 to 56 and the plate-shaped heaters 57 to 60 of the side heating unit so as to heat the powder material 26 in the carrying plate 7 and the fabrication container 52.

As described above, in this embodiment, the four rod-shaped heaters 53 to 56 and the four plate-shaped heaters 57 to 60 are used as the side heating unit. Moreover, the rod-shaped heaters 53 to 56 are attached inside the four corner portions 52c to 52f (holes 52k to 52n) of the fabrication container 52, and the plate-shaped heaters 57 to 60 are attached to the outer sides of the four straight portions 52g to 52j of the fabrication container 52.

This makes it possible to reliably heat the powder material 26 at the regions near the corner portions 52c to 52f and the regions near the straight portions 52g to 52j inside the fabrication container 52, i.e., the peripheral region 41 inside the fabrication container 52 through the sides of the fabrication container 52 during the preheating.

In this way, in the carrying plate 7 and the fabrication container 52, the temperature of the powder material 26 at the peripheral region 41 can be brought close to the temperature of the powder material 26 at the center region 40, which is the suitable temperature. As a result, the difference in temperature between the powder material 26 at the peripheral region 41 and the powder material 26 at the center region 40 can be rendered small.

Hence, a model 39 can be fabricated at the peripheral region 41 as accurately as at the center region 40.

Also, in this embodiment, a plurality of regions are formed in each of the rod-shaped heaters 53 to 56 across which the amount of heat generation is smaller at a lower position in the length direction, and a plurality of regions are formed in each of the plate-shaped heaters 57 to 60 across which the amount of heat generation is smaller at a lower position in the width direction.

Moreover, among the plurality of regions differing in amount of heat generation in each of the rod-shaped heaters 53 to 56 and the plurality of regions differing in amount of heat generation in each of the plate-shaped heaters 57 to 60, the uppermost region with the largest amount of heat generation is disposed on the flange 52a side of the fabrication container 52 and the lowermost region with the smallest amount of heat generation is disposed on the rib 52b side.

For this reason, when the rod-shaped heaters 53 to 56 and the plate-shaped heaters 57 to 60 are attached to the sides of the fabrication container 52, the amount of heat generation is smaller at a lower position in the height direction of the fabrication container 52.

Thus, as the position of the solidified layers 35a to 38a is lowered inside the fabrication container 52 during the fabrication of models 39, the temperature of the solidified layers 35a to 38a drops gradually inside the portions of the sides of the fabrication container 52 provided with the heat generation portions of the rod-shaped heaters 53 to 56 and the plate-shaped heaters 57 to 60.

In this way, the temperature of the solidified layers 35a to 38a at the peripheral region 41 in the fabrication container 52 does not drop drastically when the position of the solidified layers 35a to 38a in the fabrication container 52 is lowered to the portions not provided with the heat generation portions of the rod-shaped heaters 53 to 56 and the plate-shaped heaters 57 to 60 from the portions provided with the heat generation portions of the rod-shaped heaters 53 to 56 and the plate-shaped heaters 57 to 60.

It is therefore possible to suppress the reduction in dimensions of models 39 fabricated at the peripheral region 41 in the fabrication container 52 from the designed dimensions, and/or the warpage of the models 39. It is also possible to avoid the decrease in the strength of the models 39 fabricated at the peripheral region 41 in the fabrication container 52 to below the designed strength.

Also, the models 39 can be taken out of the fabrication container 52 in a short time after the fabrication of the model 39 ends and all heaters of the powder bed fusion apparatus are turned off, as compared to a case where the amount of heat generation by the heat generation portion of each of the rod-shaped heaters 53 to 56 is fixed in the length direction and the amount of heat generation by each of the plate-shaped heaters 57 to 60 is fixed in the width direction.

The above first embodiment has been described by taking as an example a case in which the number of regions differing in amount of heat generation formed in the L-shaped heaters 20 to 23 of the side heating unit 6 is four. Also, the second embodiment has been described by taking as an example a case in which the number of regions differing in amount of heat generation formed in the rod-shaped heaters 53 to 56 and the plate-shaped heaters 57 to 60 of the side heating unit is four.

However, the number of regions differing in amount of heat generation formed in each heater of the side heating unit is not limited to four but may be any number as long as it is more than one. Such the number of regions may be set according to the size of the fabrication container 5 or 52, the type (melting point) of the powder material 26, and so on.

Also, the above first embodiment and second embodiment have been described by taking as an example a case in which the plurality of regions differing in amount of heat generation in the L-shaped heaters 20 to 23, the rod-shaped heaters 53 to 56, and the plate-shaped heaters 57 to 60 are formed by preparing a plurality of metallic wires as heat generators differing in electrical resistivity and disposing these metallic wires in the plurality of regions.

However, the method of forming the plurality of regions differing in amount of heat generation in each heater of the side heating unit is not limited to this.

For example, the plurality of regions differing in amount of heat generation in each heater of the side heating unit may be formed by preparing a single metallic wire as a heat generator having a single electrical resistivity and setting different numbers of turns of the metallic wire per unit length for the plurality of regions in the heater of the side heating unit according to a preset distribution of heat generation amount.

## Claims

1. A powder bed fusion apparatus (1) comprises:
a container (5, 52) that has a quadrangular shape as viewed from above and has an opening in an upper surface;
a table (18) which is disposed in the opening of the container and onto which a powder material is supplied through the upper surface; and
a plurality of heaters (20-23, 53-56) that are attached to each of corner portions (5c-5f, 52c-52f) of sides of the container to heat the powder material on the table through the corner portions.

2. The powder bed fusion apparatus (1) according to claim 1, wherein
the heaters are L-shaped heaters (20-23) as viewed from above,
the L-shaped heaters are attached to outer sides of the corner portions of the container, and
the sides of the container are surrounded by the plurality of the L-shaped heaters.

3. The powder bed fusion apparatus (1) according to claim 2, wherein the L-shaped heaters have an exterior member made of a same material as a material of the container.

4. The powder bed fusion apparatus (1) according to claim 2or 3, wherein the powder bed fusion apparatus further comprises a fastening member (25) that is disposed on outer sides of the plurality of L-shaped heaters and fastens the plurality of L-shaped heaters to attach the plurality of L-shaped heaters to the corner portions of the container.

5. The powder bed fusion apparatus (1) according to claim 4, wherein
the powder bed fusion apparatus further comprises a heat insulation member (24) sandwiched between the plurality of L-shaped heaters and the fastening member, and
the heat insulation member comprises a plurality of protrusions (24a) disposed at positions corresponding to ends of each of the plurality of L-shaped heaters in a length direction thereof, and protruding toward the L-shaped heaters.

6. The powder bed fusion apparatus (1) according to any one of claims 2 to 5, wherein
each of the L-shaped heaters has a plurality of regions (20h-20k) arranged side by side in a width direction of the L-shaped heater and differing from each other in amount of heat generation,
the plurality of regions are such that the amount of heat generation gets smaller from the uppermost region (20h) toward the lowermost region (20k) in the width direction of the L-shaped heater, and
among the plurality of regions, the uppermost region with a largest amount of heat generation is disposed on the upper surface side of the container, and the lowermost region with a smallest amount of heat generation is disposed on a lower surface side of the container.

7. The powder bed fusion apparatus (1) according to any one of claims 2 to 6, wherein
each of the L-shaped heaters has a plurality of regions arranged side by side in a length direction of the L-shaped heater and differing from each other in amount of heat generation, and
among the plurality of regions, a region (51i, 51k, 51m, 51o) corresponding to a corner portion of the L-shaped heater is larger in amount of heat generation than regions (51h, 51j, 511, 51n) corresponding to straight portions excluding the corner portion.

8. The powder bed fusion apparatus according to claim 1, wherein
the container (52) comprises a hole bored (52k-52n) in a lower surface of each of the corner portions from a lower side toward an upper side,
the heaters are rod-shaped heaters (53-56), and
the rod-shaped heaters are attached by being inserted into the holes in the container from the lower surfaces of the corner portions.

9. The powder bed fusion apparatus according to claim 8, wherein
each of the rod-shaped heaters has a plurality of regions (53d-53g) arranged side by side in a length direction of the rod-shaped heater and differing from each other in amount of heat generation,
the plurality of regions are such that the amount of heat generation gets smaller from the uppermost region (53d) toward the lowermost region (53g) in the length direction of the rod-shaped heater, and
among the plurality of regions, the uppermost region with a largest amount of heat generation is disposed on the upper surface side of the container, and the lowermost region with a smallest amount of heat generation is disposed on a lower surface side of the container.

10. The powder bed fusion apparatus according to claim 8or 9, wherein the powder bed fusion apparatus further comprises a plurality of plate-shaped heaters (57-60) that are attached to an outer side of each of straight portions of the sides of the container excluding the corner portions to heat the powder material on the table through the straight portions.

11. The powder bed fusion apparatus according to claim 10, wherein
each of the plate-shaped heaters (57-60) has a plurality of regions (57b-57e) arranged side by side in a width direction of the plate-shaped heater and differing from each other in amount of heat generation,
the plurality of regions are such that the amount of heat generation gets smaller from the uppermost region (57b) toward the lowermost region (57e) in the width direction of the plate-shaped heater, and
among the plurality of regions, the uppermost region with a largest amount of heat generation is disposed on the upper surface side of the container, and the lowermost region with a smallest amount of heat generation is disposed on a lower surface side of the container.
